(19) Europäisches Patentamt
European Patent Office
Office européen des brevets

(11) Publication number: 0 107 894
B1

(12) EUROPEAN PATENT SPECIFICATION

(45) Date of publication of patent specification: 31.01.90

(51) Int. Cl.[5]: F 02 D 1/00

(21) Application number: 83305162.6

(22) Date of filing: 06.09.83

(60) Divisional application 89110630.4 filed on 06/09/83.

# (54) Method and apparatus for precisely controlled fuel injection in a diesel engine.

(30) Priority: 16.09.82 US 418688

(43) Date of publication of application: 09.05.84 Bulletin 84/19

(45) Publication of the grant of the patent: 31.01.90 Bulletin 90/05

(84) Designated Contracting States: DE FR GB IT

(56) References cited:
FR-A-1 522 293
GB-A-2 085 978
US-A-2 985 378
US-A-3 442 451
US-A-3 827 409
US-A-4 219 154
US-A-4 297 982

(73) Proprietor: BKM, INC.
5141 Santa Fe Street
San Diego California 92109 (US)

(72) Inventor: Beck, Neils J.
5141 Santa Fe Street
San Diego California 92109 (US)
Inventor: Calkins, Michael A.
5141 Santa Fe Street
San Diego California 92109 (US)
Inventor: Barkhimer, Robert L.
5141 Santa Fe Street
San Diego California 92109 (US)
Inventor: Goohs, Christian G.
5141 Santa Fe Street
San Diego California 92109 (US)
Inventor: Weseloh, William E.
5141 Santa Fe Street
San Diego California 92109 (US)

(74) Representative: Baillie, Iain Cameron et al
c/o Ladas & Parry Isartorplatz 5
D-8000 München 2 (DE)

EP 0 107 894 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

1. Background of the invention and prior art

Internal combustion engines of the diesel type are characterized by their injection of a carefully premeasured charge of liquid fuel directly into the compression-heated air of a combustion chamber formed by the rapid, inward movement of a piston in its cylinder. There is no premixing of fuel and prior to injection.

This heterogeneous mixture of fuel and air at the time of injection which occurs when the piston is near top-dead-center of its compression stroke, has created challenges for diesel engineers since the invention of the engine by Rudolf Diesel in the 1890's. These include the accurate control of beginning and ending of injection, the rate at which the fuel is injected, the shape and direction of the injection spray, and the formation and control of the hydraulic pressure under which the fuel is forced into the engine cylinder. A diesel fuel system, in addition to providing the correct volume of fuel charge at each injection for all speed and load conditions, must also control fuel delivery for cold starting of the engine, govern idle and maximum speeds, and have fail-safe features to prevent engine "runaway" from occurring.

A study of prior patent art and published literature provides a well documented record of the progress in diesel fuel injection systems. One reference in this area is Burman and DeLuca, *Fuel Injection* and *Controls for Internal Combustion Engines;* 1962, which contains an historical section listing fuel injection developments as described mostly by patent literature.

Other relevant technical references include the following papers:

1. K. Komiyama, *Electronically Controlled High Pressure Injection System* for *Heavy Duty Diesel Engine*—KOMPICS, Soc. of Auto Engrs. Paper No. 810997, 1981.

2. J. Akagi, *A New Accumulator Fuel Injection System for Direct Injection Diesel Engines,* Soc. of Auto Engrs. Paper No. 821114, 1982.

3. Ralph J. Hooker, "Orion—A Gas Generator Turbocompound Engine", *Transactions,* Soc. of Auto Engrs., Vol. 65, 1957, pps 15—17.

The above references offer background falling within the scope of this patent, namely accumulator-type injectors with pressure multipliers. A worthwhile summary of commercially available diesel fuel systems may be found in Robert Brady, *Diesel Fuel Systems,* Reston, 1981.

From the earliest days of diesel engines troubles were encountered with the fuel lines between the injection pump and nozzles. The unit injector combines the pump and nozzle, eliminates the high pressure lines, and thus offers a solution to the problem.

Many diesel engines are manufactured having a single cylinder, and the required fuel supply is then relatively simple. Nevertheless, in addition to the injector associated with the one cylinder, the entire fuel supply system includes numerous additional components. For multi-cylinder diesel engines the complete fuel supply system becomes relatively complex.

Fuel injectors are generally by far the most expensive component parts of a diesel engine. The reason is that they carry fuel pressures of many millions of Pascal (thousands of psi), their mechanical operation occurs very rapidly, and in order to control both the quantity of the fuel charge and the timing of its injection with a desired level of precision, the mechanical parts of the injector mechanism itself must be manufactured with extremely precise tolerances.

In the diesel fuel injection systems currently in commercial use the controls for the system are essentially mechanical in nature. Many different mechanical arrangements have been used for controlling the fuel supply to the engine in order to satisfy the engine speed and load conditions.

Relevant prior art patents include the patents to Luscomb (U.S.A. No. 4,219,154), De Nagel (U.S.A. No. 3,442,451) and O-Neill (U.S.A. No. 3,827,409).

O'Neill shows the general concept of controlling fuel injection by varying common rail pressure in response to a parameter of engine operation. Applicant does not claim this concept, in and of itself, as Applicant's invention.

De Nagel shows an accumulator type injector. An earlier patent to Falberg (U.S.A. No. 2,985,378) also shows an accumulator type injector. The present invention is directed to the method and apparatus for controlling the operation of an accumulator type injector.

The invention in its presently preferred form utilizes pressure intensification, and a solenoid valve for controlling the operation. Luscomb shows a fuel system including a pressure intensifier and a solenoid control valve. Luscomb is therefore a pertinent reference. The present invention, however, has vast differences over Luscomb in the form of the apparatus the method of operation, and the results achieved. The method of operation will first be discussed.

The injection of an individual fuel charge requires the steps of pressurization, metering, timing, and injection. In the prior art these steps have been combined in various ways. In Luscomb, for example, metering is completed first. The metering is done volumetrically, as has been traditional in the industry. Then, as a timed function, the pressurization and injection of the fuel charge are done concurrently.

According to the present invention, however, a totally different approach is used. Pressurization of the individual fuel charge is commenced, continued, and then terminated, as a timed function. The end result of the pressurization then determines the metering of the fuel charge, which is a function of the peak pressure that was established inside the accumulator chamber. Termination of the pressurization also causes the injection event to commence, but, characteristic of the accumulator injector, the time duration of the injection event is determined only by the accumulator injector itself and not by any of the control equipment that precedes it.

Luscomb used the movement of his intensifier piston to pressurize, time, and inject the individual fuel charge. His apparatus times both the commencement and the ending of the injection event. His apparatus does not utilize the accumulator type of injector and does not rely upon a peak pressure achieved at the end of a measured time interval.

Not only is the present invention readily and clearly differentiated from the prior art, but it also provides distinctly superior performance. Control of the mass of the injected fuel charge is much more precise. Yet the burden on pressure pumps and other associated apparatus is far less demanding.

2. Summary of the invention

The essence of the invention is described in the independent claims.

Another important feature of the invention is that metering of the fuel charge is controlled, and adjusted as desired, without making any mechanical adjustments within the mechanism of the unit injector assembly. Instead, desired adjustments in the fuel charge to be metered are accomplished either hydraulically or electrically, or by a combination of hydraulic and electrical means.

The hydraulic control of the metering of the fuel charge is accomplished by adjusting the output pressure of a pump that is used as a common supply source for all injector assemblies associated with all cylinders of the engine. While an adjustment is made at the location of the pump, there is only one such adjustment for the entire engine, and it does not take place inside any of the unit injector assemblies.

When the control of the metering of the fuel charge is accomplished electrically, it is done simply by varying the time interval throughout which the solenoid valve is in the open position during each cycle of engine operation. Specifically, by keeping the solenoid valve open longer, the pressure level built up in the intensifier is greater, and the quantity of fuel charge delivered to the accumulator is increased. Conversely, by reducing the time interval throughout which the solenoid valve is open, the fuel charge may be decreased.

The quantity of fuel injected and the pressure at which the fuel is injected into the chamber are controlled by selecting the volume of the accumulator chamber and controlling the maximum and minimum pressures of the injection process.

3. Advantages of the invention

The invention provides a cost-effective, practical means for precise control and very high pressure fuel injection in internal combustion engines. Benefits which result from high pressure and precise control are improved fuel economy, lower exhaust emissions, reduced noise level, and reduced stress on injection-system components. Furthermore the system is very simple, and permits taking full advantage of the capabilities of present day electronic technology. A single electric signal to a unit injector results in the initiation of injection. Subsequently injection terminates without any additional signal. The termination function without a second signal is inherent in the system.

A particular advantage of the invention is that the size or quantity of the fuel charge injected is independent of the engine speed.

4. Drawing summary

Figure 1 is a schematic drawing of a fuel injection system for a four-cylinder engine in accordance with the present invention;

Figure 2 is a schematic diagram illustrating the primary functional features of one of the unit injector assemblies;

Figure 3 is a side elevational view of a unit injector assembly in accordance with the present invention;

Figure 4 is a top plan view of the unit injector assembly of Figure 3;

Figures 5 and 6 are cross-sectional elevational views of the unit injector assembly taken on the respective cross-section lines indicated in Figure 4;

Figure 7 is an enlarged fragmentary cross-sectional view showing the T-valve in its closed position;

Figure 8 is an enlarged fragmentary cross-sectional view of the spray tip;

Figure 9 is an enlarged fragmentary portion of Figure 5a, but showing the intensifier pistons during their forward stroke and the T-valve in its open position;

Figure 10 is a partial view like Figure 9, but showing the alternate position of the solenoid valve;

Figure 11 shows the electrical pulse applied to the solenoid valve;

Figure 12 is a wave form diagram illustrating the operating cycle of the unit injector assembly of Figures 2 through 10; and

Figure 13 is an enlarged view of one portion of the wave form diagram of Figure 12.

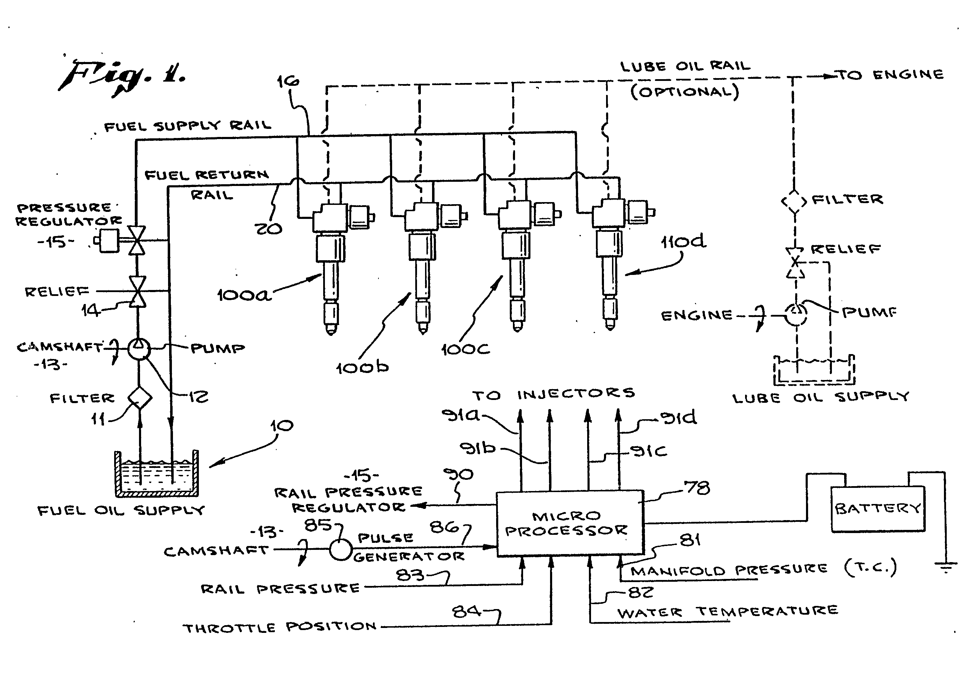

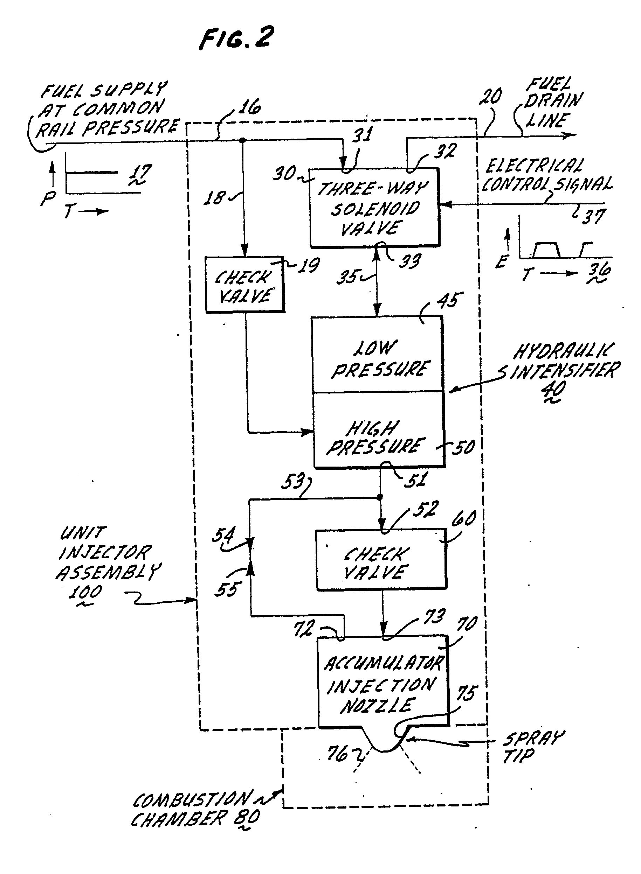

5. System arrangement (Figures 1 and 2)

Referring now to Figure 1, a complete fuel supply system for a four cylinder diesel engine is there illustrated in schematic form.

From a fuel supply tank 10, liquid fuel is drawn through a filter 11 by means of a pump 12 driven mechanically from the engine cam shaft 13 (not shown). Pump 12 is of the continuous flow type, generating a relatively continuous but adjustable pressure. From pump 12 the fuel is forced through a relief valve 14 to a pressure regulator 15. From regulator 15 the liquid fuel is supplied at a steady pressure to a fuel supply line 16, which is connected to all of the unit injector assemblies.

Four substantially identical unit injectors assemblies 100 are shown in accordance with their actual physical appearance. It will be understood that each unit injector assembly is mounted on the engine cylinder head for purpose of injecting fuel charges into the combustion chamber of the respectively associated cylinder of the engine.

Also shown in Figure 1 is a fuel return line 20.·It serves as a drain from each of the unit injector assemblies 100.

Reference is now made to Figure 2 which schematically illustrates the structure and operation of an individual unit injector assembly 100. It should be noted that reference numerals smaller than 100 are used to identify the various features of the complete fuel injection system as shown in Figure 1. They are also used to identify the schematically represented parts of the unit injector assembly as shown in Figure 2. In the later drawing figures, where the actual mechanical construction of a unit injector assembly 100 is shown, the various parts are identified by reference numbers greater than 100.

As schematically shown in Figure 2, the unit injector assembly 100 receives its fuel supply at a pressure from the common fuel supply line 16. Fuel return line 20 leads from injector assembly 100. The fuel return line 20 is also known as a fuel drain line on a fuel return rail in the technology. The operation of the unit injector assembly is controlled by a three-way solenoid valve 30. The operation of the valve, in turn, is controlled by voltage pulses 36 received on the electrical control signal line 37. The unit injector assembly is mounted on the engine cylinder head, now shown. The function of the unit injector assembly is to inject fuel into a combustion chamber 80, shown in dotted lines, of an associated engine cylinder.

More specifically, the common fuel supply has a steady pressure level as shown by the small diagram 17. The electrical control signal for the solenoid valve consists of a series of substantially square-wave voltage pulses 36 as shown in the diagram. One voltage pulse is supplied during each cycle of the engine operation, as will later be explained in more detail.

The solenoid valve 30 has an inlet port 31 which receives fuel from the common fuel supply line 16. It also has a drain port 33. It also has an outlet port 32 to which the fuel return line 20 is coupled. Application of the leading edge of voltage pulse 36 acts to move the valve to the "on" condition so that there is fluid communication between inlet port 31 and the common outlet port 33. At the same time, there is no fluid communication with drain 32. Then when the voltage pulse ends, the valve is returned to its "off" position, in which fluid communication is between the common outlet port 33 and the fuel return port 32 and not with the fuel inlet port 31. It will be understood that solenoid-controlled three-way valves operating in this general fashion are previously known in the art.

Hydraulic intensifier 40 includesd a low pressure chamber 45 and a high pressure chamber 50. The high pressure chamber 50 is also known as the compression or intensifying chamber. A metering duct 18 connects directly from the fuel supply line 16 through a check valve 19 to the compression chamber 50, so that a supply of fuel is always available to the compression chamber.

In the schematic diagram of Figure 2 a line 35 connected between common outlet port 33 of the solenoid valve and low pressure chamber 45 has arrows pointing in both directions. This line and its arrows schematically illustrate the operation by which fuel is alternately supplied from the valve into the low pressure chamber during one portion of each engine cycle, and then subsequently flows from that chamber back into the valve. More specifically, when the valve has been turned on by the voltage pulse 36 fuel flows from supply line 16 through inlet port 31 and hence through the interior of valve 30, its common outlet port 33, and into the low pressure chamber 45 of the intensifier. When the voltage pulse ends and the solenoid valve is turned off, the fuel in the low pressure chamber 45 then flows in the reverse direction to the common outlet port 33 of the valve, hence through the interior of the valve to drain port 32, and thence to the fuel drain or return line 20.

The low pressure chamber 45 of hydraulic intensifier 40 does not contain the fuel charge that is ultimately injected into the combustion chamber 80. Its only function is to multiply the pressure of the fuel within the compression intensifying chamber 50. The term multiply used in the sense of this invention is the ratio of the areas of the low and high pressure intensifier pistons. Thus, once during each engine cycle a quantity of fuel passes through the solenoid valve into the low pressure chamber 45, and the energy created by the flow of that quantity of fuel is then utilized to multiply the pressure of the fuel contained in high pressure chamber 50. When the potential energy stored in the accumulator has been converted to injection energy that quantity of fuel entering said chamber 45 is caused to drain off to the fuel return line 20. This operation is repeated during each cycle of the engine operation. The use of a hydraulic intensifier in a diesel fuel injection system is shown in the Luscomb patent number 4,219,154.

Accumulator injection nozzle 70 is shown as having two separate fuel inputs designated as 72 and 73. The fuel admitted into input 73 comes from compression chamber 50 via outlet port 51 and check valve 60 with its inlet port 52. Inlet 72 receives its fuel supply through circuit 53 which bypasses check valve 60. The quantity of fuel passing through this circuit is extremely small. On the schematic Fig. 2, the opposing arrows 54 and 55 on circuit 53 show that while two-directional flow is possible, the intention of this circuit 53 is more one of pressure communication.

During each cycle as the pressure in the compression chamber 50 is building up, the check valve 60 becomes biased in a forward direction and permits fuel to pass from the high pressure chamber 50 into the accumulator injector 70. By this means a fuel charge is admitted to the accumulator injector during each said cycle.

When electrical pulse 36 ends, solenoid valve 30 closes, the pressure in low pressure chamber 45 drops, and the pressure in the high pressure chamber 50 also decreases rapidly. This causes check valve 60 to close, stopping the flow of fuel through that check valve into the accumulator. However, a fuel pressure coupling of limited effect still exists between the metering chamber 50 and the accumulator injector nozzle 70 by way of the pathway schematically illustrated by the line 53.

Discontinuance of the inflow of the fuel charge into accumulator injector 70 and the decrease in pressure in line 52 initiate injection of the fuel charge into the combustion chamber. The fuel enters chamber 80 as sprays 76 whose directions are determined by the orifices of spray tip 75.

The structure of the accumulator injector 70, and its mode of operation, including check valve 60 and the parallel pressure path 53, are generally similar to that shown in the Falberg patent number 2,985,378. However, as will be seen in connection with the description of the presently preferred embodiment of the invention, the accumulator injector of the invention does provide certain novel features which result in improved operation.

It will be understood that a hydraulic mechanism such as schematically illustrated in Figure 2 requires an initial priming with the supply liquid before it achieves a steady operating state. In the preceding description it has been assumed that the initial priming or start-up condition has already occurred, and that the device is operating in a steady state fashion.

By way of example, a typical pressure in the supply line 16 may be on the order of 103.4 bars. The multiplying effect of intensifier 40 may be fifteen or more, or as low as three. Therefore, the pressure in metering chamber 50 may be raised to about 1,550.9 bars (103.4×15=1,550.9), and this full pressure is transferred into the accumulator injection nozzle 70.

Reference is again made to Figure 1 showing the complete fuel supply system. An electrical control system such as a microprocessor 78 is used to control the operation of the fuel supply system. The microprocessor receives various input signals, and produces various output signals, as will now be described.

An input signal representing intake manifold air pressure of the engine is received on an input line 81. Another input signal representing cylinder block water temperature is received on an input line 82. Another input line 83 supplies an electrical signal whose magnitude represents the pressure level in the fuel supply line 16. Still another signal applied on input line 84 represents the position of the throttle, as established by the operator of the engine, or as per control governor to meet the required load conditions imposed on the engine. Since the microprocessor 78 must be synchronized with the engine, an electrical signal is acquired for example from cam shaft 13 for the purpose of timing or synchronizing a pulse generator 85 with the engine. Signals from the pulse generator 85 are supplied on an input line 86 to the microprocessor.

According to the present invention the microprocessor 78 carries out a timing cycle within which a series of events are timed and controlled, and the duration of that timing cycle may correspond to one revolution of the engine crankshaft, or to two or more crankshaft revolutions. In the case of a two-stroke cycle engine the timing cycle will ordinarily be carried out during one complete revolution of the engine crankshaft. For a four-stroke cycle engine, the timing cycle would ordinarily correspond to two revolutions of the engine crankshaft.

In accordance with the present invention, however, the fuel consumption may be reduced considerably for certain engine operating conditions by changing the timing. For example, a two-stroke cycle engine that is idling and not under load, might have the timing cycle as determined by the multiprocessor set to initiate an injection of fuel not at every revolution, but at every two, three or four engine revolutions. In similar fashion, for a four-stroke cycle engine, the timing cycle of the microprocessor may be modified to correspond to an integral multiple of two engine revolutions. The operating cycle of the engine then corresponds to the timing cycle set by the microprocessor.

The desired timing cycle of the microprocessor may be carried out entirely within that unit of the system. Alternatively, the pulse generator 85 may, if desired, be programmed to act as a frequency multiplier, so that rather than generating merely one pulse for each revolution of the crankshaft, it will generate a series of pulses containing some predetermined number of evenly spaced pulses.

An output line 90 generates an electrical signal which is utilized for controlling the operation of pressure regulator 15. Adjusting the pressure setting of regulator 15 in turn causes the pressure on supply line 16 to either increase or decrease, and results in a corresponding change in the quantity of the fuel charge injected into the combustion chamber of each cylinder. The manner in which this pressure regulator control function is carried out, and its significance, are described later in greater detail.

The microprocessor 78 also has signal output lines 91a, 91b, 91c, and 91d. The output signal supplied from output line 91a controls the operation of unit injector assembly 100a, while output lines 91b, c and d control the injector assemblies 100b, c and d, respectively. Each output signal on one of the lines 91 consists of a square voltage wave (see pulse 36 of Fig. 2) which occurs once during each timing cycle of the microprocessor 78. When the square wave commences, the coil of solenoid valve 30 (Figure 2) of the associated injector assembly is energized. When the square wave of voltage (36) ends, the solenoid coil is deenergized.

The signals supplied to the output lines 91 provide three important timing functions for controlling the operation of the unit injector assemblies 100, and hence the operation of the diesel engine as a whole. These different timing functions will now be briefly identified.

One timing function, already mentioned, is to reduce the engine fuel consumption by making the timing cycle of the microprocessor, and hence the engine cycle, correspond to an integral multiple of the normal engine firing cycle.

A second important timing function of the microprocessor output signals is to establish the instant of time at which fuel injection into the combustion chamber will commence relative to the top dead center position of the associated piston. This particular timing function is controlled by the point at which the square wave of voltage ends, thus de-energizing the associated solenoid valve. This function is described in more detail later.

A third timing function of the microprocessor is to determine the duration of the time interval throughout which the solenoid valve is energized. The duration of that time interval may be increased by turning on the valve earlier, or may be decreased by turning it off earlier. This particular timing function affects the amount of pressure intensification that is attained by pressure intensifier 40 (Figure 2), and hence the quantity of each injected fuel charge, as will be described in greater detail later.

There is a fourth timing function which the microprocessor 78 may be called upon to perform. This timing function is to make individual adjustments for each cylinder of the engine in respect to the time when injection is to be commenced, and also in respect to the duration of the time interval through which the solenoid valve is turned on. This is a "fine tuning" function which is discussed in more detail in one of the last paragraphs of this description.

6. Detailed description of the mechanical parts of the unit injector assembly

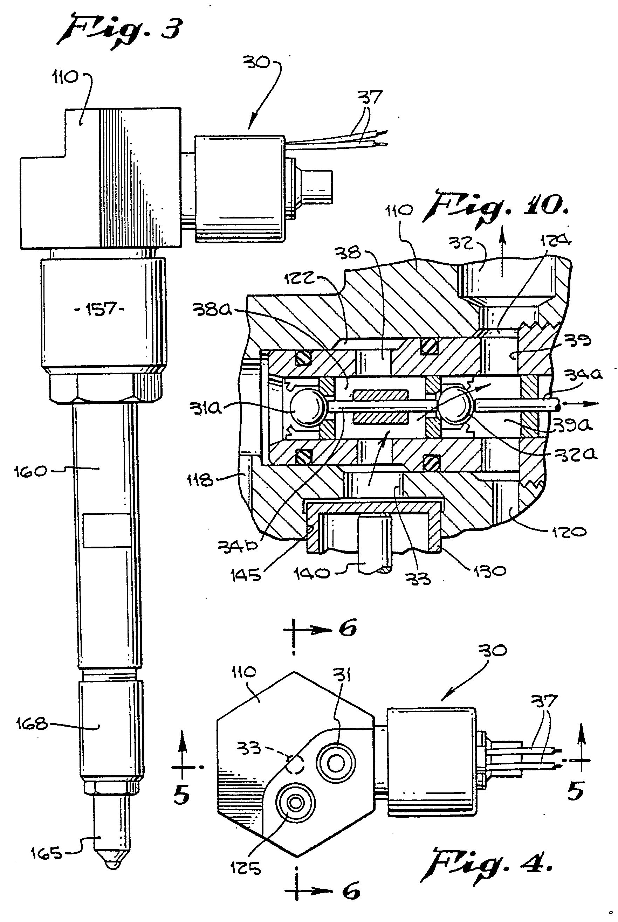

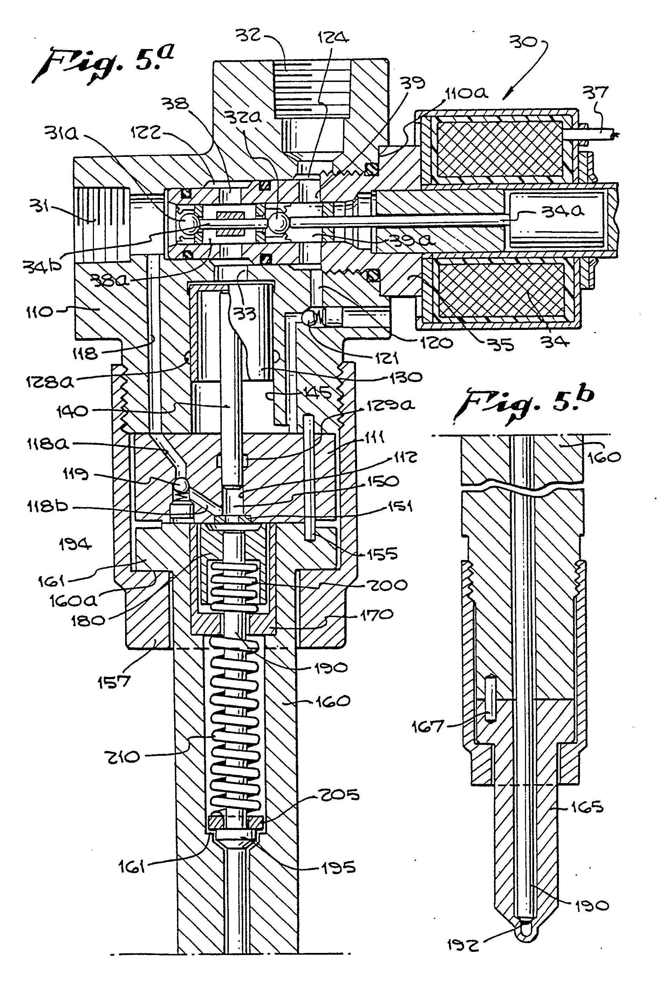

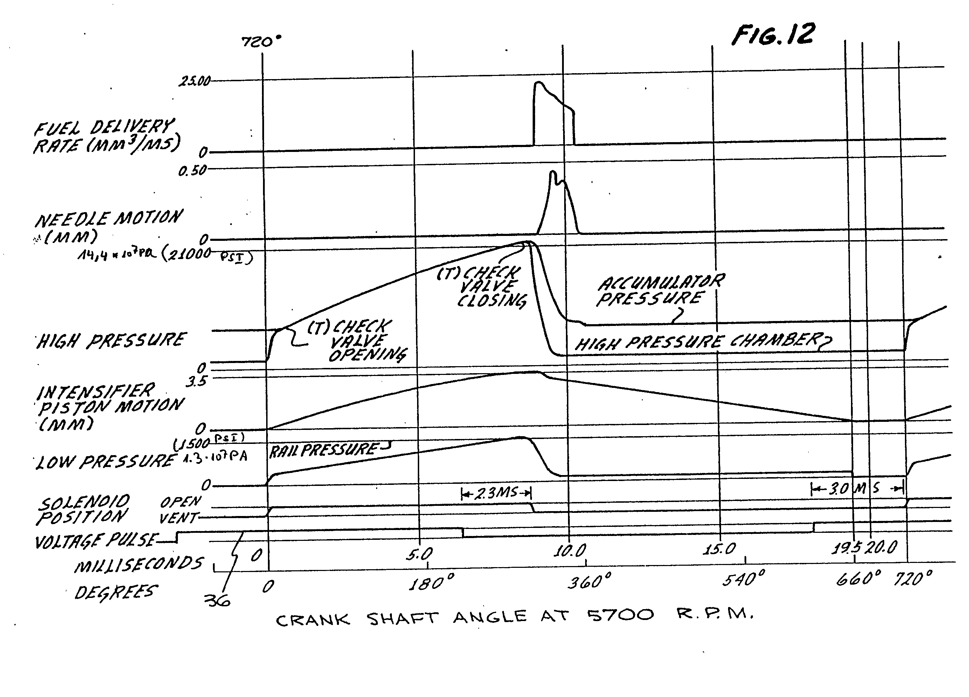

This description is made with reference to drawing Figures 3 through 10 incisive, and includes numbered paragraphs.

Paragraph 1

The solenoid unit 30, Fig. 3, is separately packaged. It is described in United States Patent No. 4,391,292 issued at the U.S. Patents Office on July 5, 1983, which is under the same ownership as the present application. The solenoid unit is concentric about a central longitudinal axis, with certain exceptions. One exception is the lead wires 37 which connect at one part of the circumference of the energizing coil. Another exception is two transverse passageways 38, 39 (Figs. 5a and 9) associated with respective ball valves 31a, 32a. As shown in these drawings they are aligned vertically, but that alignment is not required.

Paragraph 2

The next part of the structure is the block or base member 110 for the control module. It is shown in Figures 3, 4, 5a, 6 and 9. As shown in Figure 5a the top opening 32 is the drain port. The opening at the left is the fuel supply port 31. There is also an opening on the righthand side where the solenoid unit 30 is inserted, with mating threads, and the solenoid is simply screwed in securely to hold it in place. Three O-rings aid the sealing of the solenoid in the block. A shoulder on solenoid valve body 35 bears against a shoulder 110a to locate the solenoid valve in the block 110. The fuel inlet opening 31 is concentric with the cavity in block 110 which receives the solenoid unit 30. Therefore, the incoming fuel flows directly against the end of the solenoid unit. Below the solenoid valve cavity there are three passages extending vertically downward. The opening at the extreme left as shown in Figure 5a is the metering duct 118. The opening in the middle is the common outlet port 33 coupled to the low pressure chamber of the hydraulic intensifier. The opening on the righthand side is a drain off line or passageway 120 for ensuring proper operation of the intensifier, as will be described later. Also formed in the block 110 are an annular opening 122 providing communication between transverse passage 38 and outlet passage 33, and annular opening 124 providing communication between transverse passage 39 and drain off line 120.

Paragraph 3

In drain off line 120 there is a check valve 121, the detailed structure being like that of check valve 119 as shown in Figure 9. This structure includes a spring and a holding cap, the holding cap being retained by a press fit into an opening in block 110.

Paragraph 4

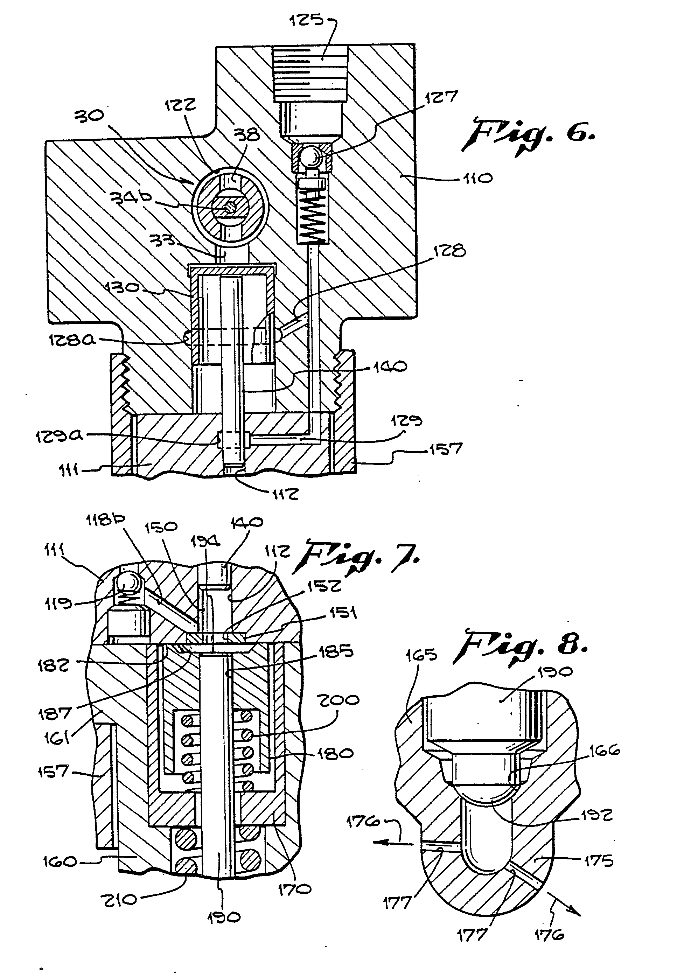

Figure 6 shows a sectional view of the block or base member 110 for the control module, but at a 90 degree angle from Figure 5. Complete lubrication circuit for the control module as seen in Fig. 6 includes a lubrication port 125 at the top, a check valve 127 beneath the lubrication port, and a pair of ducts 128, 129 which lead to a large piston 130 and a small piston 140, respectively, of the intensifier. The lubricant circuit which is shown completely only in Figure 6 is an optional feature of the apparatus. Its function, in addition to reducing friction in the case of some fuels also serve to block leakage of fuel oil past the pistons 130 and 140.

Paragraph 5

The large and small pistons 130 and 140 of the hydraulic intensifier are shown in Figures 5a, 6, 7 and 9. The large piston 130 is hollow, in the form of an inverted cup and moves axially in a cylindrical bore formed in a chamber 145. The small piston or rod 140 moves axially in its own bore. To avoid problems of concentricity and alignment, the two piston members are not fastened, but do remain in contact at substantially all times. The base member or block 110 contains the large bore 145 for the large piston 130 of the intensifier, and also an annular groove 128a spaced along the bore 145 which carries lubricating oil as previously mentioned.

Paragraph 6

A smaller block 111 is positioned immediately beneath and firmly abutting the big block 110 of the control module. See Figures 5a, 6, 7 and 9. The axial bore 112 in which the rod or small piston reciprocates also contains its annular lubricating groove 129a as seen in the various Figures. Also contained in the block 111 as shown in Figure 5a are metering duct 118a and check valve 119. Duct 118a is aligned to communicate the duct 118 in block 110 with a chamber 150 below piston 140.

Paragraph 7

The structural details of check valve 119 in the metering duct are shown in Figure 9.

Paragraph 8

The chamber 150 beneath piston 140 constitutes a compression or intensifying chamber. See Figure 5a. A washer 151 is located at the bottom end of the compression chamber. There is a recess in block 111 concentric with the metering chamber but of wider diameter, and the washer fits in that recess. The washer has a central hole which is of somewhat lesser diameter than the compression chamber. The metering duct 118a converges into the compression chamber 150 immediately adjacent the washer.

Paragraph 9

A dowel pin 155 clearly shown only in Figure 5a positively aligns the two blocks 110, 111 of the control module so that the two parts 118, 118a, of the metering duct are in full communication with each other. The same dowel pin 155 is of a length to also extend below the block 111 a short distance into the upper end of the main body of the accumulator 160. This dowel pin, in conjunction with another dowel pin to be described later, is necessary to establish the correct rotational position of the spray orifices relative to the longitudinal axis of the accumulator injector assembly.

Paragraph 10

The parts which have now been briefly described are all of the components parts of the control module. A hex nut 157 which holds the two blocks 110 and 111 together is described below.

Paragraph 11

Contained within a cylindrical bore at the upper end of the accumulator body 160 is a spring separator 170. The diameter of the bore holding this spring separator 170 is sized to tightly receive it and the end of the bore has a flat shoulder to permit the piece 170 to maintain an annular sealing contact. The length of this separator piece 170 is such that when inserted in its accumulator body cavity it is flush with the end surface of the body 160. Thus when the nut 157 clamps body 160 against the block 111 the spring separator 170 is rigidly fixed within the body 160 bearing as if it were an integral part of the accumulator body itself.

Paragraph 12

A T-valve 180, smaller, but similar in shape to the spring separator 170 is shown in Figs. 5a, 7 and 9 loosely inserted within the separator piece 170 in an inverted position relative to piece 170. A radial clearance between the two pieces 170 and 180 of approximately 0.0254 cm. permits a downward flow of fuel around this T-valve. The top or end wall of this valve piece 180 has a central opening 185 to receive the upper end of a needle valve member 190. The diameter of this opening 185 is approximately 0.310 cm. Relative sliding occurs between the needle 190 and the T-valve 180, but the clearance between the two parts is kept to a minimum. On the upper surface of the T-valve, i.e., the bottom of the cup, there is a recess 187 which is clearly shown in Figures 5a, 7 and 9.

Paragraph 13

It is important that the central hole 152 through the washer 151 be of smaller diameter than the upper end of the needle valve member 190 because the washer 151 acts as a stop or bumper for the member 190. It could not perform that function if the central opening were big enough to allow the needle valve to enter. Another size relationship is that of the depth of the recess 187 on the upper surface of the needle valve and the thickness of the washer 151. The recess depth must be less than the washer thickness to prevent the washer from becoming displaced from its recess due to the greater diameter of the recess 187 than the diameter of the washer 151. The reason for the large diameter of the recess 187 is that a relatively narrow lip is desired on the upper circumferential surface of the T-valve. The narrow lip 182 (Figure 7) ensures a high unit pressure when the T-valve is closed, and provides an effective seal with the bottom face of block 111. In the present embodiment the diameter of the entire T-valve is about 0.978 cm, while the radial thickness of the sealing lip is about 0.053 cm.

Paragraph 14

A small spring 200 shown in Figures 5a, 7 and 9 works in conjunction with the T-valve as part of the same mechanism. This is a relatively light spring exerting a small force. Its lower end seats on the spring separator 170 while its upper end seats on the under surface of the horizontal wall of the T-valve member 180.

Paragraph 15

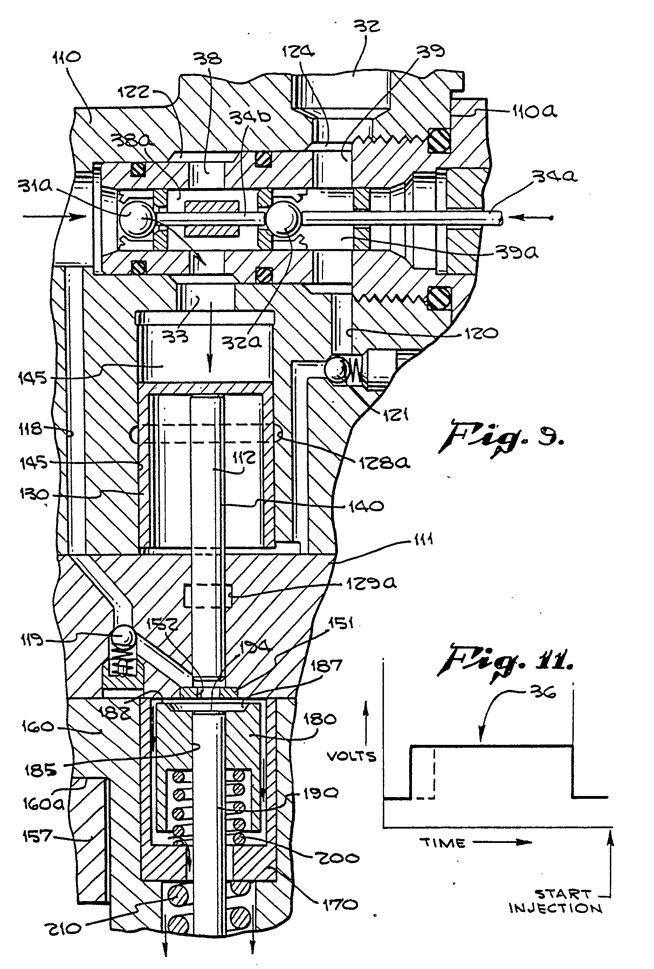

· Reference is now made to the needle valve member 190 as shown in Figures 5a, 5b, 7, 8 and 9. An accumulator tip 165 provides an extension of the lower end of accumulator body 160. Needle valve member 190 is an integral member extending almost the full length of the accumulator. A hemispherical surface 192 on the lower end of valve member 190 engages a hemispherical valve seat 166, as shown in Figure 8. The radius of the valve face 192 of the valve member 190 is kept slightly less than the radius of the valve seat 166 (of the order of 1% less). The needle valve member 190 is a rod of generally uniform diameter throughout its length, except for its lower end where the valve face 192 is formed, and an annular flange 195 (Fig. 5a) located near its upper end. It is essential, however, that the diameter of the needle valve member at the valve seat 166 is smaller than the diameter above the flange 195. See Figure 8. This is necessary to create a net pressure loading on needle valve 190 for lifting the needle valve 190 off its seat when fuel injection is to commence. The length of the needle valve member relative to the accumulator body is also critical. That is, as shown in Figures 5a and 5b, when the valve member 190 is seated on its valve seat 166 at the lower extremity of the accumulator body, the upper end 194 of the needle valve member is spaced a short distance beneath the previously described washer 151. This distance is about 0.041 cm, in the presently preferred embodiment.

Paragraph 16

Reference is now made to the bottom washer 205 seen only in Figure 5a. The accumulator body 160 has a change in the diameter of its internal opening at a point immediately below where the annular flange 195 of the needle valve member 190 is positioned. That change in diameter creates an annular shoulder 161 within the accumulator body. The bottom washer 205 rests on the annular flange 195 of the needle valve member. There is substantial clearance between the accumulator body 160 and the annular flange 195 of the valve member 190. A clearance is also maintained between the washer 205 and the accumulator body. This clearance is necessary in order to allow a downward flow of liquid fuel at all points around the circumference of the needle valve member, and of the washer.

Paragraph 17

A large spring 210 shown in Figures 5a, 7 and 9 extends between the lower washer 205 and the spring separator 170. It normally holds the needle valve member against its seat. The large spring 210 has a much higher spring force than the small spring 200 associated with the T-valve. Spring 200 is small to reduce the pressure drop across the T-valve.

Paragraph 18

The accumulator tip 165 of Figures 3 and 5b, is shown in an enlarged form in Figure 8 with its valve seat 166 and representative passages 177 acting as nozzle orifices for the fuel sprays 176.

Paragraph 19

A lower dowel pin 167 is shown only in Figure 5b. It holds the tip 165 of the accumulator onto the accumulator body 160 in a predetermined rotational position, so that a correct alignment of the spray orifices is established.

Paragraph 20

A lower hex nut 168 is shown in Figure 3, and in cross-section in Figure 5b. It works in a fashion similar to the upper and larger hex nut 157, but holds only two body members together rather than three.

The injector module is designed to be manufactured as a separate unit from the control module.

7. Operation of the solenoid valve (Figures 5a, 9, and 10)

Referring to Figure 5a, the solenoid valve 30 has a coil winding 34 which receives one of the square wave voltage pulses 36 during each cycle of the engine operation. Energizing the coil 34 causes a solenoid plunger 34a to move a short distance to the left. The position of the plunger as shown in Figure 5a is its extreme righthand or outer position, and that is considered to be the closed position of the three-way valve.

With the plunger in the position shown in Figure 5a, liquid fuel which enters the port 31 cannot enter the interior of the solenoid valve, because it is stopped by a ball 31a which is seated on its valve seat. The supply pressure received at the inlet port 31 ensures that ball 31a will remain seated against its valve seat. Thus, there is no fluid communication between inlet port 31 and either the drain port 32 or the common outlet port 33.

Concurrently, the seated ball 31a through a plunger extension 34b holds ball 32a in its open position and away from its corresponding valve seat. Therefore, liquid fuel which may be present in the common outlet port 33 is free to flow through the annular space 122 of block 110, into transverse passageway 38 of the solenoid valve, longitudinally in the central core of the valve body and around the ball 32a. From that point on the fluid will flow into the transverse passageway 39 of the valve, then the annular space 124 in block 110 and hence to the fluid drain port 32. The fingers at four points around the circumference of ball 32a limit the movement of ball 32a as shown in Figure 5a. Hence, there are spaces between these fingers which permit the fluid to flow between transverse passage 38 and transverse passage 39 of the valve.

The open position with the solenoid valve energized is shown in Figure 9. Fuel entering port 31 now flows around the ball 31a into the transverse passgeway 38, and through annular space 122 into common outlet port 33. At the same time, ball 32a is firmly seated on its respective valve seat, thus interrupting fluid communication between the common outlet port 33 and the drain port 32.

8. Operation of the hydraulic intensifier (Figures 5a, 9 and 13)

In general, liquid fuel from the common supply line 16 is admitted by the solenoid valve 30 into the common outlet port 33 during a portion of each engine cycle. It then flows into low pressure chamber 145, as best seen in Figure 9. The filling of low pressure chamber 145 causes the large or low-pressure piston 130 to move downward. This motion in turn forces the rod or high-pressure piston 140 to move downward, and reduce the volume of the compression chamber 150 (Fig. 5a) under the piston 140.

When the voltage pulse 36 ends, and the solenoid valve returns to its closed position as shown in Figure 5a, the operation is as follows. Liquid fuel at the common rail pressure flows from supply line 16 through metering duct 118 and past the check valve 119 into compression chamber 150. This pressure applies a force to the rod or cylinder 140 causing it to move upward. At the same time, the closing of the solenoid valve has opened the passageway between common outlet port 33 and drain port 32, causing the fuel in low pressure chamber 145 to be drained into the fuel return line. Since the pressure in the fuel return line is at a zero or reference level, there is a net pressure differential of 103.4 bars (1500 psi-the common supply pressure) available to drive both of the pistons 130, 140 from their lowermost positions as shown in Figure 9, back to their uppermost positions as shown in Figure 5a.

It will be noted that the hollow interior of the large piston 130 provides a large internal space which will receive fuel (or lubricating oil if said circuit is used) due to leakage past the large piston 130 and small piston 140. A series of passageways 120 provide communication from this space or chamber through the lower edge of block 110, to annular space 124 of the block 110, and into the fuel drain line. Without this series of passageways, hydraulic locking of the pistons would occur. Check valve 121 shown in Figures 5a and 9 prevents liquid from flowing in the opposite direction, and maintains the effectiveness of the intensifier. Thus any accumulation of liquid inside the chamber is prevented through the cooperative action of the drain line 120, check valve 121, and annular space 124.

A further feature of the hydraulic intensifier in accordance with the present invention is the provision of lubricating grooves 128a and 129a. Groove 128a surrounds the large piston 130 while 129a surrounds the small piston 140. Lubricating oil or grease having a high viscosity is admitted into the port 125 as shown in Figure 6 and thence through check valve 127 and ducts 128, 129 to the respective lubricating grooves. The purpose of this arrangement is not merely to provide lubrication for the reciprocating movements of the pistons of the hydraulic intensifier. An additional purpose, perhaps even more important, is to prevent or greatly reduce leakage of the diesel fuel past the lubricating grooves. The prevention or reduction of the fuel leakage is accomplished because the lubricating oil has a much higher viscosity than does the liquid fuel.

9. Operation of the compression chamber (Figures 5a, 7 and 9)

When the high pressure piston 140 is in its most elevated position as shown in Figure 5a, the compression chamber 150 is then full of liquid fuel. As the piston 140 moves upward fuel under pressure flows from the supply line 16 through the entry port 31 and metering duct 118 and past the check valve 119 into the compression chamber. When the high pressure piston starts to move downward, however, the ball valve 119 seats and seals, preventing any flow of the liquid fuel in the reverse direction out the metering duct 118. Thus, a selected or predetermined quantity of fuel at the line pressure (about 103.4 bars) is trapped in the compression chamber 150.

During subsequent operation of the intensifier, the pressure of compression chamber 150 is greatly increased to a pressure equal to the pressure on the large piston times the area ratio of the large and small pistons. The volume of chamber 150 reduces as the pressure increases. As a typical value, the level of pressure of the fuel inside the compression chamber may be increased by a factor of fifteen.

Reference is now made to Figure 13 illustrating the operation of the presently preferred embodiment of the invention. As shown in Figure 13, at zero milliseconds or just before the solenoid 30 opens, the pressure in the compression or high pressure chamber 150 is about 103.4 bars.

Opening of the solenoid valve 30 causes this pressure level to rise rapidly to about 413.6 bars (6,000 psi). The continuing operation of the intensifier, with additional liquid fuel flowing into the low pressure chamber 145, causes the pressure level in the compression chamber to rise to about 1,516.4 bars (22,000 psi). This action takes place over a period of approximately 9 milliseconds. As shown in Figure 13, the T-valve opens when the pressure in the metering chamber reaches about 413.6 bars, and the subsequent transfer of fuel into the accumulator accounts for a reduced rate of pressure increase. The rise and rate of rise of pressure inside the compression chamber are a function of the compressibility of the fuel, and since the compressibility of the fuel is not precisely linear (i.e., a straight line), the pressure increase in the compression chamber is also not linear.

10. Operation of the T-valve and the needle valve (Figures 5a, 7 and 9)

The movements of the T-valve and the needle valve are in a definite sequential relationship with each other. The initial position is as shown in Figures 5a and 7, where both valves are closed; that is, the T-valve is in its uppermost position so that its lip 182 is in sealing relationship with the lower face of block 111. At the same time the needle valve member 190 is in its lowermost position so that its valve face 192 is seated upon the valve seat 166, as shown in Figure 8.

The first of the sequential actions to take place is that the hydraulic intensifier causes the pressure of fuel in the compression chamber 150 to rise rapidly as previously mentioned and, as shown by the curve in Figure 13. The T-valve opens when the pressure in compression chamber 150 exceeds the pressure in the accumulator by an amount which is due to both the spring load on the T-valve and the geometry of the sealing lip 182. This is approximately the closing pressure (about 413.6 bars) of the member 190. As previously mentioned, it is here assumed that the fuel system has already been primed, and that the description is of the continuing operation of the system on a steady state basis. The second sequential position of the two valves is that of the T-valve being open, while the needle valve remains closed as shown in Figure 9. As indicated by the arrows in Figure 9, liquid fuel then flows downward around the circumferential edges of the accumulator body or housing.

The next action to take place is the closing of the T-valve, returning both valve members 180 and 190 to their initial positions as shown in Figures 5a, 5b, 7 and 9. This action is caused by the turning off of the solenoid valve 30, with the resultant pressure drop in the low pressure chamber 145 and in turn in the high pressure chamber 150.

Although the valve positions are the same as previously, the conditions inside the accumulator are now significantly different. That is, the interior of the accumulator body 160 or housing has been charged with an additional quantity of liquid fuel, raising its internal pressure from about 413.6 bars to about 1,516.4 bars. As a result, differential pressure acting inside the accumulator will cause the needle valve member 190 to be raised off the valve seat 166. Although this action is well known in the prior art, it will be briefly summarized here as well.

The diameter of needle valve 190 beneath the flange 195 is smaller than its diameter above that flange. Internal fluid pressure acting on differential areas as previously described creates a net force upward on the needle valve member. That force must be sufficient to overcome the force of large spring 210. It must, in addition, be sufficient to overcome the force of fluid pressure acting upon the upper end surface 194 of the needle valve member. In this connection, reference is made to the bucking arrows 54 and 55 in Figure 2, which schematically illustrate the pressure changes taking place at the top end of the needle valve member (schematically check valve 60 of Fig. 2). The differential pressure is sufficient to raise the needle valve off its seat, hence upward movement of the needle valve member occurs, and fuel injection commences through the holes 177 in spray tip 175.

The fuel injection occurs during a time interval of about one to one and a half milliseconds. Internal pressure inside the accumulator quickly falls to the closing pressure for which it was designed, approximately 413.6 bars, depending upon the force of the spring 210 and other design factors. The needle valve member 190 then returns to its closed position. The spherical sealing surface 192 on member 190 reengages spherical seat 166, the seating stress being minimised by the previously described dimensional relationship between surfaces 192 and 166. Both valve members are again in their initial position as shown in Figures 5a and 7.

More specifically, the opening action of the T-valve is as follows: The pressure in compression chamber 150 is applied to recess 187, i.e., the entire cross-sectional area of the T-valve member 180 less the areas of bore diameter 185 containing the needle valve member 190, and circumferential lip 182. The pressure in the accumulator reaches a larger area, that of the member 180 less bore 185. Hence the pressure in compression chamber 150 is initially applied to a smaller area, and must also overcome the force of spring 200. After the valve opens, only the spring force need be overcome.

The action of the needle valve is self-centering because of its particular construction. That is, the uppper end of the needle valve fits loosely in the opening in the spring separator 170. Similarly, the T-valve member 180 also fits loosely inside the spring separator 170. At the same time, the upper end surface 194 of the needle valve is not laterally restricted in any way by the washer 151 above it, or by the lower face of the block 111. Thus, when the needle valve returns to its normal closed position, it centers itself on the valve seat 166 at the lower end of the accumulator, and the upper end portion of the needle valve member positions itself wherever necessary in order to align with the lower end. It is the support means at the upper end of the needle valve which permits it to function in this manner.

An important feature of the needle valve operation is that it is closed only by the force of spring 210. Because the valve face 192 has a slightly smaller radius than valve seat 166, the closing action occurs rapidly and smoothly, with minimal wear on the valve parts.

11. Operation of the unit injector assembly (Figures 2, 12 and 13)

The operation of the unit injector assembly in accordance with the present invention has already been described in general terms in conjunction with the schematic diagram of Figure 2.

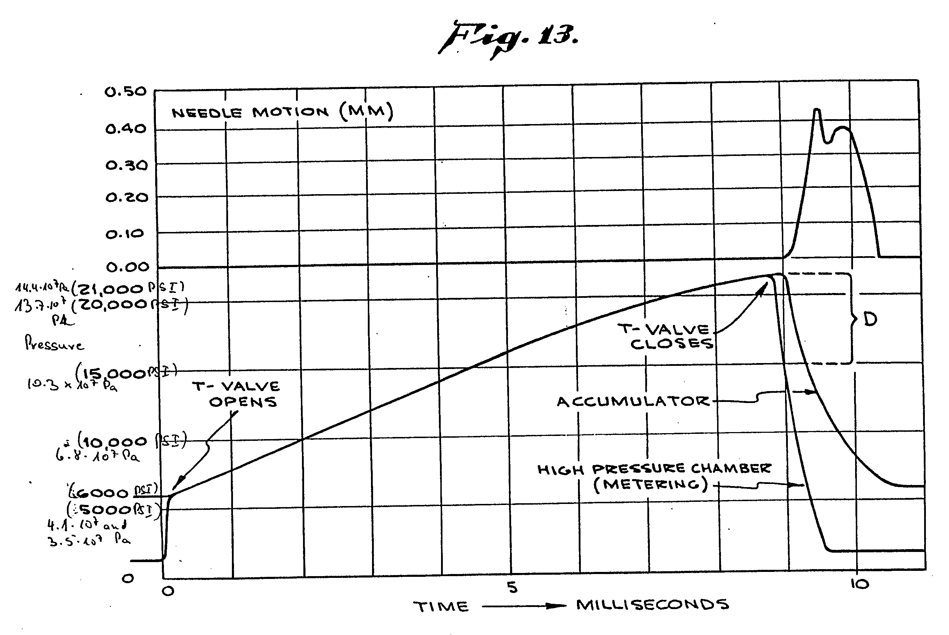

Now that the specific mechanisms of the preferred embodiment of the unit injector assembly have been described in conjunction with the detailed drawings thereof, it is appropriate to refer to Figures 12 and 13 which illustrate an example of the actual operation of the device at 5700 rpm.

As shown in Figure 12, the voltage pulse 36 causes the solenoid valve to open, but only after a delay of about 3.0 milliseconds. The common outlet port 33 had previously been bled to zero pressure level through the fluid return or drain port 32. The inward flow of fuel from the inlet 31 causes its pressure to initially rise rather rapidly, but then more slowly since it is necessary to perform work in moving the large piston 130 of the hydraulic intensifier downward. Thus as shown in Figure 12, as the intensifier pistons travel through their range of movement, the pressure in the low pressure chamber 145 rises to the level of the supply pressure (about 103.4 bars). Even before this action is completed the voltage pulse ends and after a delay of about 2.3 milliseconds the solenoid valve closes.

Closing of the solenoid valve causes the T-valve to close. The pressure in the high pressure chamber 150, which is also the pressure applied to the upper end surface 194 of the needle valve, drops sharply (see Figure 12). The accumulator pressure drops rapidly, but less so. The differential between these two pressures is applied to the needle valve member for driving it upward against the force of big spring 210. Near the upper part of Figure 12 is shown the actual motion or displacement of the needle valve member 190. As shown there, the maximum displacement of the needle is only a little over 0.40 mm (0.016 inch), because that is the spacing between the upper end of the needle valve member and the washer 151 which acts as a bumper to limit needle movement.

A very small displacement of the needle is sufficient to initiate a full flow of the fuel through the orifices. The uppermost curve in Figure 12 illustrates an example of the rate at which fuel is injected into the combustion chamber of an engine cylinder.

12. Timing the injection

The timing of the fuel injection is established by the end of voltage pulse 36, which causes solenoid 30 to return to its closed position after the aforementioned time delay of about 2.3 milliseconds. The mechanical closing of the solenoid, however, causes the injection of the fuel to occur almost immediately.

The time duration required for the fuel injection to be completed depends upon various design constants of the apparatus. The completion of the injection is determined by the characteristics built into the unit injector assembly, rather than being timed or controlled from some external source.

13. Adjusting (controlling) the fuel charge

Once the fuel system is primed and the engine is operating at a steady speed and load, the unit injector assembly operates in accordance with the balanced conditions as shown by the curves in Figures 12 and 13. That is, after the injection of each fuel charge, the fuel pressure inside the accumulator returns to the residual pressure level for which the accumulator was designed. Upon the next actuation of the hydraulic intensifier, that pressure level must be equalled and slightly exceeded before the T-valve will open and admit additional fuel from the compression chamber.

During this operating condition, a fuel charge whose quantity is selected in terms of its volume at a specified pressure is transferred from the compression chamber into the accumulator. For example, a typical fuel charge is 30 cubic millimeters at atmospheric pressure. The quantity of this fuel charge will be slightly less than the total amount of fuel that was held in the compression chamber 150 and the metering duct 118b which extends between chamber 150 and check valve 119. When this predetermined fuel charge passes into the accumulator, it may increase the total quantity of fuel contained in the accumulator by approximately five percent. This is made possible by the compressibility of the fuel. For example, the internal capacity of the accumulator may be 700 cubic millimeters (i.e., $700 \times .05 = 35$ cubic millimeters). Since an operating condition that is in hydraulic balance has been achieved, the quantity of the fuel charge injected from the accumulator into the combustion chamber will be almost precisely the same as the quantity that was transferred from the compression chamber into the accumulator.

It is important to note that with this invention the function of metering the desired mass (as distinguished from volume) of the fuel charge to be injected is accomplished in the accumulator chamber of the injector. Specifically, the mass of each fuel charge injected is metered or determined by the selected fixed volume of the accumulator chamber and by (and a direct function of) the difference between the peak pressure inside the accumulator nozzle and the pressure at which the tip valve closes. Although there is a slight pressure drop between the compression chamber and the accumulator (across the T-valve), the mass of the injected fuel charge is also a direct function of the volume of the accumulator chamber and of the difference between the peak pressure in the compression chamber and the nozzle tip valve closing pressure (fuel injection threshold pressure) of the accumulator. The quantity of fuel transferred into the compression chamber simply replaces the previously injected fuel charge.

When it is desired to change the power and/or speed of the engine, positive controls must be exercised. In accordance with the present invention, the preferred method of making such adjustments in the quantity of fuel charge is by adjusting the supply pressure level. This action was discussed previously in connection with the electrical control system 78 and its output line 90 that carries signals to the rail pressure regulator 15.

The quantity of fuel charge may also be adjusted by changing the duration of the time interval through which the hydraulic intensifier operates. That is, the start of the voltage pulse 36 can be advanced or retarded. In general, the voltage pulse commences an appreciable portion of the engine cycle in advance of the time when injection is to occur, and the intensifier builds up pressure in the compression chamber 150 for at least several milliseconds. See Figure 11, wherein a combination of a solid line and a dotted line indicate that the point of commencement of the voltage pulse 36 is subject to adjustment. In that connection it will be noted from the particular example of Figure 12 that a time interval of about 9 milliseconds is required for the intensifier pistons to reach their maximum displacement, and a time interval of about 10 milliseconds is required for the low pressure piston to return to its initial position. Fluid pressure in the low pressure chamber 145 remains at a low pressure until the large piston has returned to its initial upper position; then the pressure in chamber 145 and common output terminal 33 drops to zero. There follows a dead space or unused time interval in the engine cycle, when the capabilities of the unit injector assembly are not being utilized. Increasing or decreasing this unused time interval also involves a concurrent decrease or increase in the period of time that the solenoid valve is open. By making this adjustment to the length of time the solenoid valve remains open, the subsequent length of time that the hydraulic intensifier is able to operate can in turn be increased or decreased, and the quantity of the fuel charge produced by it can be adjusted accordingly.

In addition to adjusting the fuel charge by adjusting the level of the rail pressure, hydraulic control may also be achieved by placing a variable restriction in the fuel return line, and adjusting the magnitude of that restriction. Alternatively, both types of adjustment may be used concurrently.

Furthermore, by means of the microprocessor the adjustment of the duration of the voltage pulse, and the adjustment of the hydraulic pressures supplied to the injector unit assembly, may be used in conjunction with each other, in varying degrees, as desired.

14. Optimizing engine performance

An inherent feature of the fuel supply system of the present invention is that the hydraulic power requirement to operate the fuel injectors is relatively constant throughout the entire engine cycle, so that the peak power demand is greatly reduced.

As mentioned previously, when the engine is idling the timing cycle of the electrical control system can be changed so that it coincides with an integral multiple of the normal number of crankshaft revolutions. Thus, a modified operating cycle of the engine can be accomplished to inject a fuel charge only half or one-fourth as often as the basic operating cycle. These cycles are appropriate for light load operation. A fuel charge is injected into each cylinder of the engine only once during an operating cycle.

This mode of operation not only saves fuel but reduces the amount of exhaust pollutants.

Another feature of the present invention is the utilization of the electrical control system to control the operations of the individual cylinders differently from each other. That is, for example, in the first cylinder of the engine the hydraulic intensifier unit may be turned on for 9 milliseconds, while in the second cylinder the hydraulic intensifier may be turned on for 9½ milliseconds, and in the third cylinder for only 8½ milliseconds. This method of control makes it possible to accomplish in addition to the primary or main adjustment of fuel charge by adjusting the pressure of the common fuel supply, to accomplish a "fine tuning" action. This compensates for any differences between the cylinders in order to give them a balanced operation and improve the overall efficiency and economy of the engine operation.

15. Control characteristics

The basic fuel control methods described previously are utilized in performing the engine governing functions. Maximum speed governing, for example, reduces fuel delivery by any of the described methods in response to signals generated by the pulse generator and subsequent operations performed by the electronic control system. In a similar manner the pulse generator in cooperation with the electronic control system may perform a speed control or speed governing function by increasing the fuel delivery to increase engine speed or decrease fuel delivery to decrease engine speed. Thus a selected minimum speed or any speed within the operating range of the engine may be governed.

A sequence of electronic timing signals is generated, and is repeated once each engine cycle. When shifting to the idling mode, the time occupied by the sequence of signals is multiplied by an integral number, but the relative spacing between individual signals is preserved.

16. Alternative forms

For example, the pump 12 may be of the variable displacement pressure-compensating type with which pressure regulator 15 would not be required.

It will also be understood that Figures 12 and 13 illustrate the operation of the invention under one particular set of conditions, and that both the operating speed and the design parameters of the apparatus may be modified with corresponding modification in the operation.

**Claims**

1. A method of repetitively injecting successive charges of a compressible fuel from a pressurized fuel source (16) through a fluid pathway (18, 19, 50; or 31, 118, 118a, 119, 118b, 150) and an accumulator-type injector (70) into a combustion chamber (80) of an internal combustion engine, characterized by feeding the fuel into the injector chamber over a selected interval of time while concurrently multiplying its pressure level such that a final, maximum pressure is established within the injector chamber prior to the commencement of injection, and then shutting off the infeed of fuel so that the mass of each injected fuel charge is determined by the corresponding value of said final pressure.

2. A method of repetitively injecting successive charges of a compressible fuel from a pressurized fuel source (16) through a fluid pathway (18, 19, 50; or 31, 118, 118a, 119, 118b, 150) and an accumulator-type injector (70) into a combustion chamber (80) of an internal combustion engine, characterized by the steps of:

repetitively initiating the transfer of fuel at an initial predetermined pressure from a fuel source (16) into a fluid pathway (18, 19, 50; or 31, 118, 118a, 119, 118b, 150) that leads into an accumulator injector (70) having a chamber of substantially fixed volume;

after each such transfer, closing said fluid pathway (119, 150) against the further transfer of fuel;

multiplying the pressure of said transferred fuel throughout a selected interval of time preceding the time when injection is to commence and simultaneously feeding it into the injector chamber so that a final, desired maximum fuel pressure level is established within the injector chamber prior to the commencement of injection, the selected interval of time being longer than the time required to accomplish the injection of a fuel charge and occupying a substantial portion of an engine cycle;

then reducing the pressure in the fluid pathway (150, 152, 187) so as to discontinue the infeed of fuel into the accumulator chamber and thereby cause the accumulator injector (70) to inject into the combustion chamber (80) a fuel charge whose mass is a function of said final, maximum pressure level;

the termination of injection of the fuel charge being controlled by said accumulator-type injector; and

from time to time adjusting at least one of the source pressure and the selected interval of time such that the maximum fuel pressure level which is established within the accumulator injector chamber corresponds to the fuel charge mass that is then desired to be injected.

3. The method of either Claim 1 or Claim 2 wherein the selected interval of time is adjusted so as to vary the mass of successive fuel charges.

4. The method of Claim 1 or Claim 2 wherein the source pressure of the fuel from fuel source (16) is adjusted so as to vary the mass of successive fuel charges.

5. The method of any of the foregoing claims wherein both the source pressure and the selected interval of time are adjusted so as to vary the mass of successive fuel charges.

6. The method of any of the foregoing claims wherein a non-return valve (60; or 180, 200) is placed at the entry to the accumulator chamber, and the infeed of fuel into the accumulator chamber is discontinued by relieving the pressure in the fluid pathway (150, 152, 187) so that the non-return valve (60; or 180, 200) closes.

7. The method of Claim 6 wherein the relief of pressure in the fluid pathway is controlled electronically.

8. The method of any of the foregoing claims wherein the transfer of fuel, its application to the fluid pathway, and its pressure multiplication, are all controlled electronically.

9. Apparatus for repetitively injecting successive charges of a compressible fuel from a pressurized fuel source (16) through a fluid pathway (18, 19, 50; or 31, 118, 118a, 119, 118b, 150) and an accumulator-type injector (70) into a combustion chamber (80) of an internal combustion engine, characterized by:

a hydraulic pressure intensifier (40) having a low-pressure chamber (45, 145), and also having a high-pressure chamber (50, 150) which forms a part of the fluid pathway;

means (16, 19) associated with the fluid pathway for repetitively initiating the transfer of fuel at an initial predetermined pressure from the fuel source (16) into the high-pressure chamber (50, 150);

said accumulator injector (70) having an injector chamber of substantially fixed volume;

means (19, 119) for closing the fluid pathway against the further inflow of fuel into the high-pressure chamber (50, 150) after each such transfer;

non-return valve means (60, 180, 182) forming a part of the fluid pathway for selectively coupling the high-pressure chamber (50, 150) to the accumulator injector (70);

means (37, 30, 31, 33) for controlling said pressure intensifier to multiply the pressure of said transferred fuel contained in said high-pressure chamber (50, 150) throughout a selected interval of time preceding the time when injection is to commence and simultaneously to feed it through said non-return valve means into said injector chamber such that a final, maximum fuel pressure level is established within the injector chamber, the selected interval of time being longer than the time required to accomplish the injection of a fuel charge and occupying a substantial portion of an engine cycle;

means (37, 30, 33, 32) for then reducing the pressure in the high-pressure chamber (50, 150) so as to cause said non-return valve means to discontinue the infeed of fuel into the accumulator chamber and thereby cause the accumulator injector (70) to inject into the combustion chamber (80) a fuel charge whose mass is a function of said maximum pressure level;

the termination of injection of the fuel charge being controlled by said accumulator-type injector; and

means (78, 90; 79, 91) for from time to time adjusting at least one of the source pressure and the selected interval of time such that the maximum fuel pressure level which is established within the accumulator injector chamber corresponds to the fuel charge mass that is then desired to be injected.

10. Fuel injection apparatus as in Claim 9 which includes a solenoid valve (30) for controlling said pressure intensifier, and electric circuit means (37) coupled (34, 34a) to said solenoid valve (30) for operating said valve.

11. Fuel injection apparatus as in Claim 10 wherein said electric circuit means includes means for supplying a substantially square pulse (36) of energy to said solenoid valve (30) during each engine cycle for opening a pathway between the source (16) and said low-pressure chamber (45, 145) in response to the initiation of said pulse, said electric circuit means supplying said pulse for a sufficient duration of time such that fuel pressure is built up inside said high-pressure chamber (150) throughout the duration of said pulse and the fuel is fed from said high-pressure chamber through said non-return valve means into said accumulator injector chamber; and

said solenoid valve (30) closing the pathway between the source (16) and said low-pressure chamber upon termination of said pulse and also relieving the pressure in said high-pressure chamber, causing said non-return valve means to close and the fuel charge to be injected.

12. Fuel injection apparatus as in Claim 10 or 11 wherein said solenoid valve (30) has a fuel inlet port (31) coupled to the fuel source (16), a fuel drain port (32), and a common outlet (33) communicating with said low-pressure chamber, said valve being operative in one position to couple said common outlet to said inlet port only and being operative in another position to couple said common outlet to said drain port only.

13. Fuel injection apparatus as in Claim 12 which further includes a duct (118) coupling said fuel inlet port to said high-pressure chamber to transfer a quantity of fuel therein from the fuel source, said duct including check valve means (119) for preventing the flow of fuel from said high-pressure chamber back to the fuel source.

14. A fuel injection system including a plurality of unit injector assemblies (100) each having a hydraulic pressure intensifier (40), an accumulator injector (70), and a solenoid valve (30), as claimed in any of the foregong claims, and central means (78, 15) for adjusting the pressure level of the fuel source (16).

15. A fuel injection system including a plurality of unit injector assemblies (100) each having a hydraulic pressure intensifier (40), an accumulator injector (70), and a solenoid valve (30), as claimed in any of the foregoing claims, and central means (78, 91) for independently adjusting the time duration of energy pulses supplied to individual ones of the solenoid valves of said injector assemblies.

16. A fuel injection system as claimed in Claim 14 or 15 wherein said central adjusting means (78) further includes means for generating a periodic sequence of substantially square pulses (36) of electrical energy and applying a corresponding pulse in each sequence to a respective one of said solenoid valves.

17. Apparatus as claimed in any of the foregoing Claims 9 through 16 wherein said solenoid valve (30) is of the ball or poppet valve type.

18. Apparatus as claimed in any of the foregoing Claims 9 through 16 wherein said solenoid valve includes:

a plunger (34a), a first ball (32a) at the end of said plunger, a plunger extension (34b), and a second ball (31a) at the end of said plunger extension;

each of said balls being captured for reciprocating movement to accomplish a valving action; and

said inlet port (31) communicating with one of said balls, said drain port (32) communicating with the other of said balls, and said common outlet port (33) being located intermediate to said balls and communicating with both of them.

19. Apparatus as claimed in any of the foregoing Claims 9 through 18 wherein said accumulator injector (70) has an accumulator chamber of substantially fixed volume, a non-return valve (60, 180) at the input of the chamber, an injector valve (190) at its output, and a return mechanism (210) for closing the injector valve.

20. Apparatus as claimed in Claim 19 wherein said non-return valve is a flat check or T-valve (180), said injector valve is a needle valve (190) having a plunger which extends concentrically through said T-valve and whose upper end surface is exposed to said high-pressure chamber, and said return mechanism includes a return spring (210).

21. A fuel injection system as claimed in any of the foregoing Claims 14 through 20, wherein said central adjusting means (78) includes a microprocessor having inputs responsive to one or more of engine shaft rotation, rail pressure, throttle position, water temperature, and manifold pressure, and outputs coupled to each of said unit injector assemblies.

22. A fuel injection system as claimed in any of the foregoing Claims 14 through 20, wherein said central adjusting means (78) includes a microprocessor having inputs responsive to one or more of engine shaft rotation, rail pressure, throttle position, coolant temperature, and manifold pressure, and wherein said microprocessor also has an output (90) coupled to said rail pressure regulator.

**Patentansprüche**

1. Verfahren zum wiederholten Eindüsen von aufeinanderfolgenden Ladungen eines zusammendrückbaren Kraftstoffes von einer Quelle (16) eines unter Druck stehenden Kraftstoffes über einen Strömungsweg (18, 19, 50; oder 31, 118, 118a, 119, 118b, 150) und eine druckspeichernde Düse (70) in einen Brennraum (80) eines Verbrennungsmotors, dadurch gekennzeichnet, daß der Kraftstoff während einer gewählten Zeitspanne der Düsenkammer zugeführt und gleichzeitig sein Druckpegel derart vervielfacht wird, daß in der Düsenkammer vor dem Beginn des Eindüsens ein maximaler Enddruck hergestellt wird, und daß dann die Zuführung von Kraftstoff abgesperrt wird, so daß die Masse jeder eingedüsten Kraftstoffladung durch den entsprechenden Wert des Enddruckes bestimmt wird.

2. Verfahren zum wiederholten Eindüsen von aufeinanderfolgenden Ladungen eines zusammendrückbaren Kraftstoffes von einer Quelle (16) eines unter Druck stehenden Kraftstoffes über einen Strömungsweg (18, 19, 50; oder 31, 118, 118a, 119, 118b, 150) und eine druckspeichernde Düse (70) in einen Brennraum (80) eines Verbrennungsmotors, gekennzeichnet durch folgende Schritte:

es wird wiederholt der Transport von Kraftstoff unter einem vorherbestimmten Anfangsdruck von einer Kraftstoffquelle (16) in einen Strömungsweg (18, 19, 50; oder 31, 118, 118a, 119, 118b, 150) angeleitet, der zu einer druckspeichernden Düse (70) führt, die eine Kammer mit einem in wesentlichen festgelegten Volumen hat;

nach jedem derartigen Transport wird der Strömungsweg (119, 150) gegen einen weiteren Transport von Kraftstoff abgesperrt;

während einer gewählten Zeitspanne vor dem Zeitpunkt, in dem das Eindüsen beginnen soll, wird der Druck des transportierten Kraftstoffs multipliziert und gleichzeitig der Kraftstoff der Düsenkammer zugeführt, so daß in der Düsenkammer vor dem Beginn des Eindüsens ein gewünschter maximaler Kraftstoffenddruckpegel erzielt wird, wobei die gewählte Zeitspanne länger ist als die zum Eindüsen der Kraftstoffladung erforderliche Zeit und einen beträchtlichen Teil des Arbeitsspiels des Motors ausmacht;

danach wird durch eine Herabsetzung des Druckes in dem Strömungsweg (150, 152, 187) die Zuführung von Kraftstoff in die Druckspeicherkammer unterbrochen und wird dadurch die druckspeichernde Düse (70) veranlaßt, in den Brennraum (80) eine Kraftstoffladung einzuspritzen, deren Masse ein Funktion des maximalen Enddruckpegels ist;

wobei die Beendigung des Eindüsens der Kraftstoffladung durch die druckspeichernde Düse gesteuert wird;

mindestens einer der aus dem Quellendruck und der gewählten Zeitspanne bestehenden Parameter von Zeit zu Zeit derart eingestellt wird, daß der in der Druckspeicherkammer der Düse erzielte maximale Kraftstoffdruckpegel der Masse der jeweils einzudüsenden Kraftstoffladung entspricht.

3. Verfahren nach Anspruch 1 oder 2, dadurch gekennzeichnet, daß die Masse von aufeinanderfolgenden Kraftstoffladungen durch Einstellen der gewählten Zeitspanne verändert wird.

4. Verfahren nach Anspruch 1 oder Anspruch 2, dadurch gekennzeichnet, daß zum Verändern der Masse von aufeinanderfolgenden Kraftstoffladungen der Quellendruck des von der Kraftstoffquelle (16) kommenden Kraftstoffes verändert wird.

5. Verfahren nach einem der vorhergehenden Ansprüche, dadurch gekennzeichnet, daß zum Verändern der Masse von aufeinanderfolgenden Kraftstoffladungen sowohl der Quellendruck als auch die gewählte Zeitspanne eingestellt wird.

6. Verfahren nach einem der vorhergehenden Ansprüche, dadurch gekennzeichnet, daß am Eingang der Druckspeicherkammer ein Rückschlagventil (60; oder 180, 200) angeordnet wird und daß zum Unterbrechen der Zufuhr von Kraftstoff in die Druckspeicherkammer der Strömungsweg (150, 152, 187) druckentlastet wird, so daß das Rückschlagventil (60; oder 180, 200) schließt.

7. Verfahren nach Anspruch 6, dadurch gekennzeichnet, daß die Druckentlastung des Strömungsweges elektronisch gesteuert wird.

8. Verfahren nach einem der vorhergehenden Ansprüche, dadurch gekennzeichnet, daß der Transport des Kraftstoffes, seine Abgabe an den Strömungsweg und die Vervielfachung seines Druckes elektronisch gesteuert werden.

9. Vorrichtung zum wiederholten Eindüsen von aufeinanderfolgenden Ladungen eines zusammendrückbaren Kraftstoffes von einer Quelle (16) eines unter Druck stehenden Kraftstoffes über einen Strömungsweg (18, 19, 50; oder 31, 118, 118a, 119, 118b, 150) und eine druckspeichernde Düse (70) in einen Brennraum (80) eines Verbrennungsmotors, gekennzeichnet durch:

einen hydraulischen Druckverstärker (40) mit einer Niederdruckkammer (45, 145) und mit einer einen Teil des Strömungsweges bildenden Hochdruckkammer (50, 150);

eine dem Strömungsweg zugeordnete Einrichtung (16, 19) zum wiederholten Einleiten des Transports von Kraftstoff unter einem verherbestimmten Anfangsdruck von der Kraftstoffquelle (16) in die Hochdruckkammer (50, 150);

wobei die druckspeichernde Düse (70) eine Düsenkammer mit einem im wesentlichen festgelegten Volumen besitzt;

eine Einrichtung (19, 119) zum Schließen des Strömungsweges gegen den weiteren Eintritt von Kraftstoff in die Hochdruckkammer (50, 150) nach jedem dieser Transportvorgänge;

eine einen Teil des Strömungskanals bildende Rückschlagventileinrichtung (60, 180, 182) zum wahlweisen Koppeln der Hochdruckkammer (50, 150) mit der druckspeichernden Düse (70);

eine Einrichtung (37, 30, 31, 33) zum Steuern des Druckverstärkers derart, daß der Druck des in der Hochdruckkammer (50, 150) enthaltenen, transportierten Kraftstoffes während einer gewählten Zeitspanne vervielfacht wird, die dem Zeitpunkt vorhergeht, in dem das Eindüsen beginnen soll, und zum gleichzeitigen Zuführen des Kraftstoffes durch die Rückschlagventileinrichtung in die Düsenkammer, so daß in dieser ein maximaler Kraftstoffendruckpegel erzielt wird, wobei die gewählte Zeitspanne länger ist als die zum Eindüsen einer Kraftstoffladung erforderliche Zeit und einen beträchtlichen Teil eines Arbeitsspiels des Motors ausmacht;

eine Einrichtung (37, 30, 33, 32) zum darauffolgenden Vermindern des Druckes in der Hochdruckkammer (50, 150) derart, daß die Rückschlagventileinrichtung die Zufuhr von Kraftstoff zu der Druckspeicherkammer unterbricht und dadurch die druckspeichernde Düse (70) veranlaßt, in den Brennraum (80) eine Kraftstoffladung einzudüsen, deren Masse eine Funktion des maximalen Druckpegels ist;

wobei die Beendigung des Eindüsens der Kraftstoffladung von der druckspeichernden Düse gesteuert wird; und

eine Einrichtung (78, 90; 79, 91), die dazu dient, wenigstens einen der aus dem Quellendruck und der gewählten Zeitspanne bestehenden Parameter von Zeit zu Zeit derart zu verändern, daß der in der Kammer der druckspeichernden Düse erzielte maximale Kraftstoffdruckpegel der Masse der jeweils einzudüsenden Kraftstoffladung entspricht.

10. Kraftstoffeindüsvorrichtung nach Anspruch 9, mit einem Magnetventil (30) zum Steuern des Druckverstärkers und einer mit dem Magnetventil (30) gekoppelten (34, 34a) elektrischen Schaltungsanordnung (37) zum Steuern des Ventils.

11. Kraftstoffeindüsvorrichtung nach Anspruch 10, dadurch gekennzeichnet, daß die elektrische Schaltungsanordnung eine Einrichtung zum Zuführen von Energie in Form eines im wesentlichen rechteckigen Impulses (36) zu dem Magnetventil (30) während jedes Arbeitsspiels des Motors aufweist, und zwar derart, daß auf Grund des Beginns dieses Impulses ein Weg zwischen der Quelle (16) und der Niederdruckkammer (45, 145) geöffnet wird, und daß die elektrische Schaltungsanordnung den genannten Impuls während einer so langen Zeit abgibt, daß während der ganzen Dauer des Impulses der Kraftstoffdruck in der Hochdruckkammer (150) ansteigt und der Kraftstoff aus der Hochdruckkammer durch die Rückschlagventileinrichtung in die Kammer der druckspeichernden Düse gelangt; und

das Magnetventil (30) auf Grund der Beendigung des Impulses den Weg zwischen der Quelle (16) und der Niederdruckkammer Schließt und die Hochdruckkammer druckentlastet, so daß die Rückschlagventileinrichtung schließt und die Kraftstoffladung eingedüst wird.

12. Kraftstoffeindüsvorrichtung nach Anspruch 10 oder 11, dadurch gekennzeichnet, daß das Magnetventil (30) einen mit der Kraftstoffquelle (16) gekuppelten Kraftstoffeinlaßanschluß (31), einen Kraftstoffablaufanschluß (32) und einen mit der Niederdruckkammer verbundenen, gemeinsamen Auslaß (33) hat, und

daß das Ventil in einer Stellung den gemeinsamen Auslaß nur mit dem Einlaßanschluß verbindet und in einer anderen Stellung den gemeinsamen Auslaß nur mit dem Ablaufanschluß verbindet.

13. Kraftstoffeindüsvorrichtung nach Anspruch 12, mit einer Leitung (118), die den Kraftstoffeinlaßanschluß mit der Hochdruckkammer verbindet, um zu dieser eine Kraftstoffmenge von der Kraftstoffquelle zu transportieren, wobei die Leitung eine Rückschlagventileinrichtung (119) enthält, die ein Rückströmen von Kraftstoff von der Hochdruckkammer zu der Kraftstoffquelle verhindert.

14. Kraftstoffeindüssystem mit einer Mehrzahl von Düsenaggregaten (100), von denen jedes einen hydraulischen Druckverstärker (40), eine druckspeichernde Düse (70) und ein Magnetventil (30) besitzt, nach einem der vorhergehenden Ansprüche,

und mit einer zentralen Einrichtung (78, 15) zum Einstellen des Druckpegels der Kraftstoffquelle (16).

15. Kraftstoffeindüssystem mit einer Mehrzahl von Düsenaggregaten (100), von denen jedes einen hydraulischen Druckverstärker (40), eine druckspeichernde Düse (70) un ein Magnetventil (30) besitzt, nach einem der vorhergehenden Ansprüche,

und mit einer zentralen Einrichtung (78, 15) zum unabhängigen Einstellen der Zeitdauer von je einem der Magnetventile der Düsenaggregate zugeführten Energieimpulsen.

16. Kraftstoffeindüssystem nach Anspruch 14 oder 15, dadurch gekennzeichnet, daß die zentrale Einstelleinrichtung (78) ferner eine Einrichtung zum Erzeugen einer periodischen Folge von im wesentlichen rechteckigen Impulsen (36) elektrischer Energie und zum Zuführen eines entsprechenden Impulses jeder Folge zu einem der Magnetventile aufweist.

17. Vorrichtung nach einem der vorhergehenden Ansprüche 9 bis 16, dadurch gekennzeichnet, daß das Magnetventil (30) ein Kugel- oder Tellerventil ist.

18. Vorrichtung nach einem der vorhergehenden Ansprüche 9 bis 16, dadurch gekennzeichnet, daß das Magnetventil umfaßt:

einen Stößel (34a), eine erste Kugel (32a) am Ende des Stößels, einen Stößelfortsatz (34b) und eine zweiten Kugel (31a) am Ende des Stößelfortsatzes;

wobei jede der Kugeln so gehalten ist, daß sie sich zum Durchführen einer Ventilfunktion hin- und herbewegt; und

der Einlaßanschluß (31) mit einer der Kugeln in Verbindung steht, der Ablaufanschluß (32) mit der anderen der Kugeln in Verbindung steht und der gemeinsame Auslaßanschluß (33) zwischen den Kugeln angeordnet ist und mit ihnen beiden in Verbindung steht.

19. Vorrichtung nach einem der vorhergehenden Ansprüche 9 bis 18, dadurch gekennzeichnet, daß die druckspeichernde Düse (70) eine Druckspeicherkammer mit im wesentlichen festgelegtem Volumen, ein am Eingang der Kammer angeordnetes Rückschlagventil (60, 180), ein am Ausgang der Kammer angeordnetes Eindüsventil (190) und einen Rückstellmechanismus (210) zum Schließen des Eindüsventils umfaßt.

20. Vorrichtung nach Anspruch 19, dadurch gekennzeichnet, daß das Rückschlagventil ein flaches Sperr- oder T-Ventil (180) ist, daß das Eindüsventil ein Nadelventil (190) ist, das einen Stößel besitzt, der das T-Ventil konzentrisch durchsetzt und dessen obere Stirnfläche zu der Hochdruckkammer hin freiliegt, und daß der Rückstellmechanismus eine Rückstellfeder (210) besitzt.

21. Kraftstoffeinspritzsystem nach einem der vorhergehenden Ansprüche 14 bis 20, dadurch gekennzeichnet, daß die zentrale Einstelleinrichtung (78) einen Mikroprozessor aufweist, der Eingänge aufweist, die einem oder mehreren der folgenden Parameter zugeorndet sind: Motorwellendrehung, Schienendruck, Drosselklappenstellung, Wassertemperatur und Auspuffkrümmerdruck, und mit je einem der Düsenaggregate gekoppelte Ausgänge.

22. Kraftstoffeinspritzsystem nach einem der vorhergehenden Ansprüche 14 bis 20, dadurch gekennzeichnet, daß die zentrale Einstelleinrichtung (78) einen Mikroprozessor aufweist, der Eingänge aufweist, die einem oder mehreren der folgenden Parameter zugeordnet sind: Motorwellendrehung, Schienendruck, Drosselklappenstellung, Kühlmitteltemperatur und Auspuffkrümmerdruck, und daß der Mikroprozessor ferner einen mit einem Schienenauflagedruckregler gekoppelten Ausgang (90) besitzt.

**Revendications**

1. Procédé d'injection répétée de charges successives d'un carburant compressible d'une réserve de carburant sous pression (16) par un trajet de fluide (18, 19, 50; ou 31, 118, 118a, 119, 118b, 150) et un injecteur (70) du type à accumulateur, dans une chambre de combustion (80) d'un moteur à combustion interne, caractérisé par la transmission du carburant dans la chambre d'injecteur pendant un intervalle choisi de temps avec multiplication simultanée du niveau de pression afin qu'une pression maximale finale soit établie dans la chambre de l'injecteur avant le début de l'injection, puis par l'arrêt de la transmission du carburant afin que la masse de chaque charge injectée de carburant soit déterminée par la valeur correspondante de la pression finale.

2. Procédé d'injection répétée de charges successives d'un carburant compressible à partir d'une source de carburant sous pression (16) par un trajet de fluide (18, 19, 50; ou 31, 118, 118a, 119, 118b, 150) et un injecteur (70) du type à accumulateur dans une chambre de combustion (80) d'un moteur à combustion interne, caractérisé par les étapes suivantes:

le déclenchement répété du transfert de carburant à une pression initiale prédéterminée et provenant d'une source de carburant (16) à un trajet de fluide (18, 19, 50; ou 31, 118, 118a, 119, 118b, 150) qui débouche dans un injecteur à accumulateur (70) ayant une chambre de volume sensiblement fixe,

après ce transfert, la fermeture du trajet de fluide (119, 150) afin qu'il empêche le transfert supplémentaire de carburant;

la multiplication de la pression du carburant transféré pendant un intervalle choisi de temps qui précède le moment auquel l'injection doit commencer, et l'introduction simultanée dans la chambre de l'injecteur afin qu'un niveau maximal final voulu de pression du carburant soit établi dans la chambre d'injecteur avant le début de l'injection, l'intervalle choisi de temps étant supérieur au temps nécessaire à la réalisation de l'injection d'une charge de carburant et occupant une partie importante d'un cycle du moteur,

puis la réduction de la pression dans le trajet de fluide (150, 152, 187) afin que la transmission du carburant à la chambre d'accumulateur soit interrompue et que l'injecteur à accumulateur (70) provoque ainsi l'injection, dans la chambre de combustion (80), d'une charge de carburant dont la masse est fonction du niveau maximal final de pression.

l'interruption de l'injection de la charge de carburant étant réglée par l'injecteur du type à accumulateur, et

le réglage, de temps en temps, de la pression de la source ou de l'intervalle choisi de temps au moins, afin que le niveau maximal de la pression du carburant qui s'établit dans la chambre de l'injecteur à accumulateur corresponde à la masse de la charge de carburant dont l'injection est alors voulue.

3. Procédé selon la revendication 1 ou 2, dans lequel l'intervalle choisi de temps est ajusté afin qu'il fasse varier la masse des charges successives de carburant.

4. Procédé selon la revendication 1 ou 2, dans lequel la pression de la source de carburant provenant de la source (16) est ajustée afin qu'elle fasse varier la masse des charges successives de carburant.

5. Procédé selon l'une quelconque des revendications précédentes, dans lequel la pression de la source et l'intervalle choisi de temps sont tous deux réglés afin que la masse des charges successives de carburant varie.

6. Procédé selon l'une quelconque des revendications précédentes, dans lequel un clapet de retenue (60; ou 180, 200) est placé à l'entrée de la chambre d'accumulateur, et la transmission du carburant dans la chambre d'accumulateur est interrompue par réduction de la pression dans le trajet de fluide (150, 152, 187) afin que le clapet de retenue (60; ou 180, 200) se ferme.

7. Procédé selon la revendication 6, dans lequel la décharge de pression du trajet de fluide est réglée électroniquement.

8. Procédé selon l'une quelconque des revendications précédentes, dans lequel le transfert de carburant, son application au trajet de fluide et sa multiplication de pression sont tous commandés électroniquement.

9. Appareil d'injection répétée de charges successives d'un carburant compressible d'une source de carburant sous pression (16) par un trajet de fluide (18, 19, 50; ou 31, 118, 118a, 119, 118b, 150) et un injecteur (70) de type à accumulateur, dans une chambre de combustion (80) d'un moteur à combustion interne, caractérisé par

un organe renforçateur de pression hydraulique (40) ayant une chambre à basse pression (45, 145) et ayant aussi une chambre à haute pression (50, 150) qui fait partie du trajet de fluide,

un dispositif (16, 19) associé au trajet de fluide et destiné à déclencher de façon répétée le transfert du carburant à une pression initiale prédéterminée de la source de carburant (16) à la chambre à haute pression (50, 150),

l'injecteur à accumulateur (70) ayant une chambre d'injecteur de volume pratiquement fixe,

un dispositif (19, 119) de fermeture du trajet de fluide afin qu'il empêche l'introduction supplémentaire de carburant dans la chambre à haute pression (50, 150) après chacun de ces transferts,

un clapet de retenue (60, 180, 182) faisant partie du trajet de fluide et destiné à coupler sélectivement la chambre à haute pression (50, 150) à l'injecteur à accumulateur (70),

un dispositif (37, 30, 31, 33) destiné à commander l'organe renforçateur de pression afin qu'il multiplie la pression du carburant transféré, contenu dans la chambre à haute pression (50, 150), pendant un intervalle choisi de temps qui précède le moment auquel l'injection doit commencer, et simultanément afin que le carburant soit transmis par l'intermédiaire du clapet de retenue à la chambre d'injecteur de manière qu'un niveau maximal final de pression du carburant soit établi dans la chambre d'injecteur, l'intervalle choisi de temps étant supérieur au temps nécessaire pour la réalisation de l'injection de la charge de carburant et occupant une partie notable du cycle du moteur,

un dispositif (37, 30, 33, 32) destiné à réduire alors la pression dans la chambre à haute pression (50, 150) afin que le clapet de retenue interrompe la transmission du carburant à la chambre d'accumulateur et provoque ainsi l'injection, par l'injecteur à accumulateur (70) et dans la chambre de combustion (80), d'une charge de carburant dont la masse est fonction du niveau maximal de pression,

l'interruption de l'injection de la charge de carburant étant réglée par l'injecteur du type à accumulateur, et

un dispositif (78, 90; 79, 91) destiné à ajuster de temps en temps, la pression de la source ou l'intervalle choisi de temps au moins, afin que le niveau maximal de la pression du carburant qui est établie dans la chambre de l'injecteur à accumulateur corresponde à la masse de la charge de carburant dont l'injection est voulue.

10. Appareil d'injection de carburant selon la revendication 9, qui comporte une électrovanne (30) destinée à commander l'organe renforçateur de pression, et un circuit électrique (37) couplé (34, 34a) à l'électrovanne (30) afin qu'il commande celle-ci.

11. Appareil d'injection de carburant selon la revendication 10, dans lequel le circuit électrique comporte un dispositif destiné à transmettre une impulsion sensiblement rectangulaire (36) d'énergie à l'électrovanne (30) pendant chaque cycle du moteur afin qu'un trajet soit ouvert entre la source (16) et la chambre à basse pression (45, 145), à la suite du déclenchement de l'impulsion, le circuit électrique transmettant l'impulsion pendant une durée suffisante afin que la pression du carburant s'élève dans la chambre à haute pression (150) pendant la durée de l'impulsion et que le carburant soit transmis de la chambre à haute pression par le clapet de retenue à la chambre d'injecteur à accumulateur, et

l'électrovanne (30) fermant ledit trajet entre la source (16) et la chambre à basse pression après la fin de l'impulsion et réduisant aussi la pression dans la chambre à haute pression, le clapet de retenue se fermant et la charge de carburant étant alors injectée.

12. Appareil d'injection de carburant selon la revendication 10 ou 11, dans lequel l'electrovanne (30) a un orifice d'entrée de carburant (31) relié à la source de carburant (16), un orifice de purge de carburant (32) et une sortie commune (33) communiquant avec la chambre à basse pression,

l'électrovanne, dans une première position, pouvant coupler la sortie commune à l'orifice d'entrée uniquement et, dans une autre position, pouvant coupler la sortie commune à l'orifice de purge uniquement.

13. Appareil d'injection de carburant selon la revendication 12, qui comporte en outre un conduit (118) couplant l'orifice d'entrée de carburant à la chambre à haute pression afin qu'une quantité de carburant qui y est contenue soit transférée à partir de la source de carburant, le conduit comprenant un clapet de retenue (119) destiné à empêcher la circulation du carburant de la chambre à haute pression vers la source de carburant.

14. Appareil d'injection de carburant comprenant plusieurs ensembles injecteurs élémentaires (100) ayant chacun un organe renforçateur de pression hydraulique (40), un injecteur à accumulateur (70) et une électrovanne (30) selon l'une quelconque des revendications précédentes, et un dispositif central (78, 15) destiné à ajuster le niveau de pression de la source de carburant (16).

15. Appareil d'injection de carburant comprenant plusieurs ensembles injecteurs élémentaires (100) ayant chacun un organe renforçateur de pression hydraulique (40), un injecteur à accumulateur (70), et une électrovanne (30), selon l'une quelconque des revendications précédentes, et un dispositif central (78, 91) destiné à ajuster indépendamment la durée des impulsions d'énergie transmises aux électrovannes individuelles des ensembles injecteurs.

16. Appareil d'injection de carburant selon la revendication 14 ou 15, dans lequel le dispositif central (78) d'ajustement comporte en outre un dispositif destiné à créer une séquence périodique d'impulsions sensiblement rectangulaires (36) d'énergie électrique et à appliquer une impulsion correspondante de chaque séquence à une électrovanne respective.

17. Appareil selon l'une quelconque des revendications 9 à 16, dans lequel l'électrovanne (30) est du type à bille ou à clapet.

18. Appareil selon l'une quelconque des revendications précédentes 9 à 16, dans lequel l'électrovanne comporte:

un plongeur (34a), une première bille (32a) placée à l'extrémité du plongeur, un prolongement (34b) du plongeur et une seconde bille (31a) placée à l'extrémité du prolongement du plongeur,

chacune des billes étant retenue afin qu'elle se déplace en translation et assure une opération d'obturation, et

l'orifice d'entrée (31) communique avec l'une des billes, l'orifice de purge (32) communique avec l'autre bille, et l'orifice commun de sortie (33) est placé entre les billes et communique avec toutes les deux.

19. Appareil selon l'une quelconque des revendications précédentes 9 à 18, dans lequel l'injecteur à accumulateur (70) a une chambre d'accumulateur de volume sensiblement fixe, un clapet de retenue (60, 180) placé à l'entrée de la chambre, un obturateur d'injecteur (190) placé à sa sortie, et un mécanisme de rappel (210) destiné à fermer l'obturateur d'injecteur.

20. Appareil selon la revendication 19, dans lequel le clapet de retenue est un clapet plat ou une soupape en T (180), l'obturateur d'injecteur est une soupape à aiguille (190) ayant un plongeur placé concentriquement dans la soupape en T et dont la surface supérieure d'extrémité est exposée dans la chambre à haute pression, et le mécanisme de rappel comporte un ressort de rappel (210).

21. Appareil d'injection de carburant selon l'une quelconque des revendications précédentes 14 à 20, dans lequel le dispositif central (78) d'ajustement comporte un microprocesseur ayant des entrées commandées par un ou plusieurs signaux représentatifs de la rotation d'un arbre du moteur, de la pression de la canalisation d'alimentation, de la position du papillon des gaz, de la température de l'eau et de la pression dans le collecteur, et des sorties couplées à chacun des ensembles injecteurs élémentaires.

22. Appareil d'injection de carburant selon l'une quelconque des revendications précédentes 14 à 20, dans lequel le dispositif central (78) d'ajustement comporte un microprocesseur ayant des entrées destinées à recevoir un ou plusieurs signaux représentatifs de la rotation d'un arbre du moteur, de la pression de la canalisation d'alimentation, de la position du papillon des gaz, de la température d'un fluide de refroidissement et de la pression dans un collecteur d'admission, et dans lequel le microprocesseur a aussi une sortie (90) couplée au régulateur de la pression de la canalisation d'alimentation.

Fig. 1.
16
FUEL SUPPLY RAIL
FUEL RETURN RAIL
20
LUBE OIL RAIL
(OPTIONAL)
TO ENGINE
PRESSURE REGULATOR
-15-
RELIEF
14
CAMSHAFT
-13-
PUMP
12
FILTER
11
10
FUEL OIL SUPPLY
100a
100b
100c
110d
FILTER
RELIEF
ENGINE
PUMP
LUBE OIL SUPPLY
TO INJECTORS
91a
91b
91c
91d
-15-
RAIL PRESSURE REGULATOR
90
78
MICRO PROCESSOR
BATTERY
-13-
CAMSHAFT
85
PULSE GENERATOR
86
81
MANIFOLD PRESSURE (T.C.)
RAIL PRESSURE
83
82
WATER TEMPERATURE
84
THROTTLE POSITION

FIG. 2
FUEL SUPPLY AT COMMON RAIL PRESSURE
16
P
T
17
FUEL DRAIN LINE
20
31
32
30
THREE-WAY SOLENOID VALVE
ELECTRICAL CONTROL SIGNAL
37
18
CHECK VALVE
19
33
35
E
T
36
45
LOW PRESSURE
HYDRAULIC INTENSIFIER 40
HIGH PRESSURE
50
51
53
52
60
CHECK VALVE
54
55
UNIT INJECTOR ASSEMBLY 100
72
73
70
ACCUMULATOR INJECTION NOZZLE
75
76
SPRAY TIP
COMBUSTION CHAMBER 80

Fig. 3
110
30
37
-157-
160
168
165
Fig. 10.
110
32
124
38
122
38a
39
34a
31a
39a
32a
118
120
34b
145
140
33
130
6
6
110
31
30
37
33
5
5
125
Fig. 4.

Fig. 5.a
Fig. 5.b
32
124
30
39
110a
37
38
32a
31a
122
31
34a
34b
39a
38a
33
110
120
35
34
118
121
128a
130
145
140
129a
118a
111
112
119
150
118b
151
194
155
161
200
160a
180
170
157
190
160
210
205
161
195
160
167
165
190
192

Fig. 6.
125
127
30
122
38
110
34b
33
128
130
128a
140
129
129a
157
111
112
Fig. 7.
118b
150
194
140
111
112
152
119
151
182
185
187
200
161
180
157
160
170
210
190
Fig. 8.
165
190
166
192
176
175
177
177
176

32
110
38
124
39
122
110a
34b
38a
34a
31a
39a
33
32a
120
145
121
118
128a
145
112
130
140
111
129a
119
152
151
194
187
182
180
160
185
190
160a
157
200
170
210
VOLTS
36
TIME
START INJECTION


Fig. 9.

Fig. 11.

FIG.12
720°
FUEL DELIVERY RATE (MM3/MS)
25.00
0
0.50
NEEDLE MOTION (MM)
0
14,4 × 10⁷PA (21000 PSI)
HIGH PRESSURE
(T) CHECK VALVE OPENING
(T) CHECK VALVE CLOSING
ACCUMULATOR PRESSURE
HIGH PRESSURE CHAMBER
0
3.5
INTENSIFIER PISTON MOTION (MM)
0
(1500 PSI)
LOW PRESSURE 1.3·10⁷PA
RAIL PRESSURE
0
SOLENOID POSITION
OPEN
VENT
2.3MS
3.0 MS
VOLTAGE PULSE
MILLISECONDS
DEGREES
36
0
5.0
10.0
15.0
19.5
20.0
0
180°
360°
540°
660°
720°
CRANK SHAFT ANGLE AT 5700 R.P.M.

NEEDLE MOTION (MM)
0.50
0.40
0.30
0.20
0.10
0.00
D
T-VALVE CLOSES
ACCUMULATOR
HIGH PRESSURE CHAMBER (METERING)
T-VALVE OPENS
0
5
10
TIME → MILLISECONDS
(21,000 PSI)
(20,000 PSI)
Pressure
(15,000 PSI)
(10,000 PSI)
(6000 PSI)
(5000 PSI)

Fig. 13.